# EUROPÄISCHE PATENTANMELDUNG

(11) **EP 3 800 533 A1**
(43) Veröffentlichungstag der Anmeldung: **07.04.2021**
(21) Anmeldenummer: 19200825.8
(22) Anmeldetag: 01.10.2019
(51) Int. Cl.: G06F 3/039, A63F 3/00

(54) **ANORDNUNG ZUM ERKENNEN DURCH EINE BERÜHRUNGSEMPFINDLICHE SENSORMATRIX**

(71) Anmelder: Interactive Scape GmbH, 10179 Berlin (DE)
(72) Erfinder: EWERLING, Philipp, 10318 Berlin (DE); COOPE, Giles, 10967 Berlin (DE); PETERS, Günter Paul, 10437 Berlin (DE); MANGOLD, Ulrich, 10997 Berlin (DE); HELMER, Hauke, 10115 Berlin (DE)
(74) Vertreter: Pfenning, Meinig & Partner mbB

(57) **Zusammenfassung**

Die Erfindung betrifft eine Anordnung (10, 11) zum Detektieren durch eine berührungsempfindliche Sensormatrix (40), umfassend
- eine elektrisch leitfähige Struktur (12), wobei die Struktur (12) eine ringförmige Berührungsfläche (13) und eine Markierung (15, 16, 17) aufweist, und
- ein elektrisch isolierendes Trägermaterial (14), auf dem die Struktur (12) aufgebracht ist oder in das die Struktur (12) eingebettet ist.

Weiter betrifft die Erfindung ein Verfahren zum Erkennen der Anordnung (10, 11) auf einer berührungsempfindlichen Sensormatrix, ein Verfahren zum Herstellen der Anordnung (10, 11), eine Gruppe von Anordnungen sowie ein System mit der Anordnung (10, 11).

## Beschreibung

Die vorliegende Erfindung betrifft eine Anordnung, welche durch eine berührungsempfindliche Sensormatrix, wie einen berührungsempfindlichen Bildschirm, detektierbar ist. Die Anordnung umfasst eine elektrisch leitfähige Struktur und ein elektrisch isolierendes Trägermaterial, auf dem die Struktur aufgebracht ist oder in das die Struktur eingebettet ist. Weiter umfasst die Erfindung eine Gruppe derartiger Anordnungen, ein Verfahren zur Herstellung einer Anordnung, ein System mit der Anordnung und einer Steuer- und Verarbeitungseinheit sowie ein Verfahren zum Erkennen der Anordnung auf einer berührungsempfindlichen Sensormatrix bzw. einem berührungsempfindlichen Bildschirm.

Heutzutage kommen in verschiedenen Bereichen berührungsempfindliche Bildschirme (Touchscreens) zum Einsatz. Berührungsempfindliche Bildschirme werden beispielsweise in Smartphones, Tablet-PCs und in verschiedensten Automaten eingesetzt. Ein Vorteil dieser berührungsempfindlichen Bildschirme ist, dass sowohl eine Eingabe als auch eine Ausgabe über den Bildschirm erfolgen kann. Berührungsempfindliche Bildschirme sind typischerweise in der Lage, zu detektieren, an welcher Stelle der Bildschirm mit einem Finger berührt wird.

In vielen berührungsempfindlichen Bildschirmen kommen kapazitive Touchscreens zum Einsatz. Hierbei liegen typischerweise in einem Glas zwei quer zueinander ausgerichtete Gitter aus durchsichtigen elektrischen Leitungen. Das obere der beiden Leitungsgitter sendet stetig elektrische Signale zum unteren Gitter. Wird der Bildschirm mit einem Finger berührt, verändert sich eine elektrische Kapazität der dazwischenliegenden isolierenden Schicht, und ein Signal wird an dieser Stelle schwächer. Ein Prozessor errechnet dann eine Position, an der das Signal abgefallen ist, und gibt Ort und Dauer der Berührung an eine Software des Geräts weiter. Diese wiederum führt dann eine entsprechende Aktion auf die Berührung hin aus.

Derartige kapazitive berührungsempfindliche Bildschirme, die oft außerdem eine Vielzahl von Berührungen gleichzeitig detektieren können (Multitouch-Displays) sind üblicherweise nicht dazu ausgelegt, Objekte, die auf den berührungsempfindlichen Bildschirm gestellt werden, zu detektieren. Im Gegenteil umfassen derartige Systeme typischerweise Filter, um Berührungsdaten, die durch die Objekte ausgelöst werden, aktiv herauszufiltern.

In der Literatur werden verschiedene aktive und passive Eingabeeinheiten vorgeschlagen, die durch einen berührungsempfindlichen Bildschirm detektierbar sind, bzw. Verfahren vorgeschlagen, in denen passive Eingabeeinheiten mittels eines berührungsempfindlichen Bildschirms detektierbar sind. Beispielsweise bezieht sich die US 2010/0149119 A1 auf eine Informationsverarbeitungsvorrichtung, die eine Kapazitätsänderung eines kapazitiven Touchscreens überwacht. Die Kapazitätsänderung wird dabei durch ein leitendes Material verursacht, in welchem Musterinformationen, wie z.B. ein QR-Code kodiert sein können.

Für eine reibungslose Bedienung eines berührungsempfindlichen Bildschirms mittels einer Eingabeeinheit sollten mindestens eine oder zwei oder mehr der folgenden Bedingungen erfüllt sein:
1. Es sollte feststellbar sein, ob Eingabeeinheiten sich im Moment auf dem berührungsempfindlichen Bildschirm befinden oder nicht, und zwar unabhängig davon, ob sie durch einen Benutzer angefasst werden oder nicht, und unabhängig davon, wie deren Position und Orientierung auf dem berührungsempfindlichen Bildschirm ist.
2. Jede Eingabeeinheit sollte eindeutig identifizierbar sein.
3. Eine genaue Position und/oder Orientierung der Eingabeeinheit oder der Eingabeeinheiten auf dem Bildschirm sollte bestimmbar sein.
4. Eine Veränderung der Position und Orientierung sich schnell bewegender Eingabeeinheiten sollte ohne spürbare Verzögerung detektierbar sein.

Es hat sich herausgestellt, dass viele im Stand der Technik gezeigte Systeme zumindest eine oder mehr als eine bzw. alle dieser vier Bedingungen nicht oder nicht zufriedenstellend zu erfüllen vermögen.

In bestimmten Ausführungsformen eines berührungsempfindlichen Bildschirms ist der berührungsempfindliche Bildschirm zeilenweise und spaltenweise mit Elektrodenleitungen versehen, wobei jede Zeile eine Ansteuerleitung und jede Spalte eine Ausleseleitung beinhaltet. Mit dieser sogenannten Sensormatrix kann eine Kapazität gemessen werden, in dem der Reihe nach jede Ansteuerleitung mit einem elektrischen Impuls angeregt wird, und die Antwort auf jeder Ausleseleitung gemessen wird. Dieses Messverfahren wird im Allgemeinen als Gegenkapazitätsmessung (mutual capacitance measurement) bezeichnet. Die entsprechenden Sensoren werden typischerweise mPCAP-Sensoren genannt (mutually projective capacitive touch). Das Ziel der Gegenkapazitätsmessung besteht darin, die Änderung der Kapazität zwischen einer Ansteuer- und einer Ausleseleitung, die die Gegenwart und das Ausmaß einer Berührung angeben kann, zu messen. Die Ladung einer Berührung, die nicht komplett geerdet ist, kann jedoch von der Ansteuerleitung auf die Ausleseleitung übergehen, anstelle vollständig auf Erde über zu gehen, wodurch das Messsignal verzerrt werden kann. Dieser Effekt wird in der Literatur als Retransmission bezeichnet. Die Retransmission kann auch schon beim Aufsetzen von zwei Fingern einer Person auftreten.

Retransmission in einem berührungsempfindlichen Bildschirm kann mehrere Effekte verursachen. Erstens kann Retransmission dazu führen, dass eine Berührungssensorsteuereinheit eine einzige große Berührung als mehrere Berührungen interpretiert. Zweitens kann Retransmission die Berührungsamplitude eines Signals reduzieren, wodurch die Genauigkeit der Berührungspositionsschätzung reduziert wird. Die Berührungssensorsteuereinheit kann z. B. eine Berührung in dem oberen linken Abschnitt des berührungsempfindlichen Bildschirms fälschlicherweise als eine Berührung in dem oberen mittleren Abschnitt des berührungsempfindlichen Bildschirms interpretieren. Drittens kann Retransmission die Werte der Berührungsamplitude derart reduzieren, dass eine sogenannte "Antiberührung" (anti-touch) mit negativen Amplituden erzeugt wird.

Diese Retransmissionseffekte werden in der Literatur und im Stand der Technik meistens als nachteilig angesehen. So wird beispielsweise in der Veröffentlichung US 9 335 873 B2 versucht, die beschriebenen Effekte der Retransmission zu kompensieren.

Im Buch "Projected Capacitive Touch - a practical guide for engineers" von Tony Gray, Springer 2019, ISBN 978-3-319-98391-2 wird die Retransmission in den Kapiteln 17 und 18 genauer beschrieben.

Aufgabe der Erfindung ist es, eine Anordnung vorzuschlagen, die zuverlässig durch eine berührungsempfindliche Sensormatrix detektiert und erkannt werden kann. Außerdem ist es Aufgabe der Erfindung, ein Verfahren zum Erkennen der Anordnung auf einer berührungsempfindlichen Sensormatrix bereitzustellen, das die Nachteile des Standes der Technik zumindest teilweise zu überwinden vermag.

Die Aufgabe wird durch eine Anordnung mit den Merkmalen des Hauptanspruchs, eine Gruppe von Anordnungen sowie ein System mit der Anordnung und einer Steuer- und Verarbeitungseinheit mit den Merkmalen der Nebenansprüchen gelöst. Weiter werden ein Verfahren zur Herstellung der Anordnung sowie ein Verfahren zum Erkennen der Anordnung auf einem berührungsempfindlichen Bildschirm vorgeschlagen. Weiterbildungen ergeben sich aus den Merkmalen der abhängigen Ansprüche sowie aus der Beschreibung und den Figuren.

Erfindungsgemäß wird eine Anordnung zum Detektieren durch eine berührungsempfindliche Sensormatrix bereitgestellt, umfassend
- eine elektrisch leitfähige Struktur, wobei die Struktur eine ringförmige Berührungsfläche und eine Markierung aufweist, und
- ein elektrisch isolierendes Trägermaterial, auf dem die Struktur aufgebracht ist oder in das die Struktur eingebettet ist.

Die elektrisch leitfähige Struktur ist insbesondere ausgebildet, beim Auflegen der Anordnung auf die berührungsempfindliche Sensormatrix Kapazitätsänderungen zu verursachen, die durch kapazitive Sensoren der berührungsempfindlichen Sensormatrix als Sensordaten detektierbar sind, insbesondere selbst dann, wenn die Anordnung nicht durch einen Benutzer angefasst wird. In vielen Fällen ist eine Vielzahl von nebeneinander angeordneten berührungsempfindlichen Sensoren vorgesehen, welche auch als Sensoranordnung oder Sensormatrix bezeichnet werden kann. Eine Eingabe kann dann z.B. durch Auflegen der Anordnung auf die Sensormatrix oder Kontaktieren der Sensormatrix durch die Anordnung erfolgen. Falls zusätzlich eine Ausgabe an einen Benutzer erwünscht ist, kann eine Ausgabeeinheit, wie ein Bildschirm, vorgesehen sein. Die Sensormatrix kann ein Bestandteil eines berührungsempfindlichen Bildschirms sein, mit dem typischerweise eine Ausgabe über den Bildschirm möglich ist. Eine Ausgabe über den Bildschirm ist jedoch nicht zwingend notwendig. Eine andersartige Rückmeldung an den Benutzer ist auch denkbar, z.B. eine andere visuelle, eine auditive oder eine haptische Rückmeldung. Da in der Praxis häufig ein berührungsempfindlicher Bildschirm verwendet wird, wird dieser Begriff im Folgenden oft verwendet. In der vorliegenden Schrift können die Begriffe "berührungsempfindliche Sensormatrix" und "berührungsempfindlicher Bildschirm" austauschbar verwendet werden. In bestimmten Ausführungsformen ist die Sensormatrix rechteckig. Die Sensormatrix kann durch M Spalten und N Zeilen gebildet sein, wobei die Anzahl der Sensoren dann M*N beträgt.

Elektrisch leitfähiges Material, das auch als elektrisch leitendes Material bezeichnet werden kann, das auf einer Sensormatrix bzw. einem berührungsempfindlichen Bildschirm aufliegt und über mehrere Elektrodenleitungen (oder Drähte) der Sensormatrix reicht, kann eine kapazitive Kopplung zu anderen Elektrodenleitungen, insbesondere horizontalen Elektrodenleitungen verursachen, die an Masse anliegen. Sie verursachen eine ähnliche Signalveränderung wie Finger. Allerdings mit geringerem Signal-to-Noise-Verhältnis, typischerweise von 1:3 bis 1:20, da zweimal das Sensorglas des berührungsempfindlichen Bildschirms überwunden werden muss. Das Signal der Ansteuerleitung muss nämlich einmal das Sensorglas bei der Ansteuerleitung und einmal das Sensorglas bei der Ausleseleitung durchqueren. Die Sensormatrix kann eine Vielzahl von berührungsempfindlichen, kapazitiven Sensoren aufweisen. Weiter kann die Sensormatrix für eine gleichzeitige Erkennung von mehreren Berührungen ("multi-touch") ausgebildet sein.

Die Erfinder haben erkannt, dass die oben beschriebenen Retransmissionseffekte ausgenutzt werden können, um eine verbesserte Detektion bzw. Erkennung der Anordnung zu ermöglichen. Das gleiche Phänomen der Retransmission kann nämlich auch bei elektrisch leitfähigen Strukturen auftreten, und kann charakteristische Signale in der berührungsempfindlichen Sensormatrix bzw. im berührungsempfindlichen Bildschirm auslösen. Wird die elektrisch leitende Struktur angefasst, ist das entgegengesetzte, durch Retransmission ausgelöste Signal schwächer als das positive Signal an Kreuzungspunkten der Elektrodenleitungen, die von dem elektrisch leitenden Material der Struktur überdeckt werden. Wird das elektrisch leitende Muster nicht angefasst, sind beide Signale ungefähr gleich stark, da beide Signale zweimal das Sensorglas (Glasscheibe) des berührungsempfindlichen Bildschirms durchqueren müssen. Dies kann dazu führen, dass sich bei rechteckigen Formen, wenn sie parallel zur Sensormatrix angeordnet sind, alle Signale auslöschen, wenn keine andere kapazitive Kopplung zu Masse, wie z.B. über einen Menschen, vorliegt.

Somit kann die elektrisch leitfähige Struktur ein charakteristisches Kapazitätsmuster im berührungsempfindlichen Bildschirm verursachen.

Die Erfinder haben erkannt, dass zwei Bedingungen erfüllt werden sollten, um einerseits eine zuverlässige Detektion der elektrisch leitfähigen Struktur der Anordnung durch die Sensormatrix bzw. den berührungsempfindlichen Bildschirm und andererseits eine Identifizierung der elektrisch leitfähigen Struktur zu ermöglichen. Die Identifizierung der elektrisch leitfähigen Struktur kann insbesondere beim Verwenden bzw. Auflegen mehrerer elektrisch leitfähigen Strukturen auf der Sensormatrix bzw. dem Bildschirm wichtig sein.

Zum Einen sollte ein Bereich der durch die leitfähige Struktur ausgelösten Veränderungen in den Kapazitiven Bildern möglichst unabhängig von der Orientierung, d.h. dem Drehwinkel der elektrisch leitfähigen Struktur relativ zur Sensormatrix sein. Dieser Bereich kann zur Groberkennung der Anordnung und/oder Positionsbestimmung der Anordnung auf dem Bildschirm verwendet werden.

Weiter sollte eine Orientierung der leitfähigen Struktur auflösbar sein. Andere Bereiche der elektrisch leitfähigen Struktur sollten sich bei Drehung der elektrisch leitfähigen Struktur auf eine Art verändern, die auch bei Drehung nicht zu Ähnlichkeiten mit anderen Varianten der elektrisch leitfähigen Struktur führt, damit die elektrisch leitfähigen Strukturen unabhängig von der Orientierung der elektrisch leitfähigen Struktur auf dem berührungsempfindlichen Bildschirm unterscheidbar bleiben.

Die erste Bedingung kann durch die genannte ringförmige Berührungsfläche der Anordnung gewährleistet werden. Die ringförmige Berührungsfläche führt dazu, dass die Orte auf dem berührungsempfindlichen Bildschirm, an denen die Anordnung aufliegt, leicht zu finden sind (beispielsweise mit Thresholding, Contour Detection, Template Matching und/oder zeitliche Veränderung), da in einem die ringförmige Berührungsfläche umfassenden Quadrat der Sensormatrix außerhalb der ringförmigen Berührungsfläche oder in einem Bereich innerhalb der ringförmigen Berührungsfläche ein charakteristisches Berührungsmuster entsteht, dass nicht bzw. relativ wenig von der Orientierung bzw. dem Drehwinkel der Anordnung relativ zur Sensormatrix abhängt. Die ringförmige Berührungsfläche kann derart ausgebildet sein, dass in der Mitte der ringförmigen Berührungsfläche, wo sich kein elektrisch leitfähiges Material befindet, z.B. ein negatives Signal oder mehrere negative Signale in der Sensormatrix ausgelöst werden. Es kann eine gedachte quadratische Fläche der Sensormatrix mit einer dem Durchmesser der ringförmigen Berührungsfläche entsprechenden Breite bzw. Länge definiert werden. Diese gedachte quadratische Fläche kann beim Kontaktieren der Sensormatrix durch die Anordnung um die ringförmige Berührungsfläche gelegt werden, sodass die gedachte quadratische Fläche die ringförmige Berührungsfläche umschließt. Die Eckpunkte der quadratischen Fläche liegen dann außerhalb der ringförmigen Berührungsfläche. In mindestens einem Eckpunkt oder in allen Eckpunkten dieser quadratischen Fläche können durch die ringförmige Berührungsfläche negative Signale in der Sensormatrix ausgelöst werden. Sowohl die Mitte der ringförmigen Berührungsfläche als auch die Eckpunkte der quadratischen Fläche hängen nicht von der Orientierung der Anordnung auf der Sensormatrix ab. Somit können diese orientierungsunabhängigen charakteristischen Signale zur Erkennung der Position der Anordnung auf der Sensormatrix verwendet werden.

Die zweite Bedingung kann durch die beanspruchte Markierung der elektrisch leitfähigen Struktur erfüllt werden. Mit der Markierung kann also die Orientierung der Anordnung auf dem Bildschirm festgestellt werden. Außerdem kann die Markierung dazu ausgestaltet sein, die elektrisch leitfähige Struktur von anderen elektrisch leitfähigen Strukturen zu unterscheiden und somit insbesondere die Anordnung von Anordnungen mit unterschiedlichen Markierungen zu unterscheiden.

In einer Ausführungsform umfasst oder ist die Markierung mindestens eine weitere Berührungsfläche. Die als Berührungsfläche ausgestaltete Markierung kann also zusätzlich zur ringförmigen Berührungsfläche vorgesehen sein. Die weitere Berührungsfläche kann insbesondere elektrisch leitend mit der ringförmigen Berührungsfläche verbunden sein. Hierdurch kann die Signalstärke erhöht werden bzw. das Signal-Rausch-Verhältnis verbessert werden.

Die weitere Berührungsfläche kann z.B. innerhalb der ringförmigen Berührungsfläche angeordnet sein. Insbesondere kann der Umriss der elektrisch leitfähigen Struktur bei Verwendung einer Vielzahl von Anordnungen für jede Anordnung gleich sein. In dieser Ausführungsform kann der berührungsempfindliche Bildschirm anhand des Umrisses der elektrisch leitfähigen Struktur relativ schnell erkennen, dass es sich um eine vorbekannte Anordnung handelt. Die Unterscheidung der Anordnung von anderen Anordnungen (Identifikation der Anordnung) kann dann über die vorgesehene Markierung erfolgen, die vorzugsweise innerhalb der ringförmigen Berührungsfläche liegt oder Bestandteil der ringförmigen Berührungsfläche ist.

Die Markierung umfasst zum Beispiel mindestens zwei Berührungsflächen. Durch Vorsehen von mindestens zwei Berührungsflächen kann die Anzahl der voneinander unterscheidbaren Anordnungen erhöht werden. Die mindestens zwei Berührungsflächen können winklig zueinander angeordnet sein. Eine beispielhafte Markierung umfasst eine erste Berührungsfläche und eine zweite Berührungsfläche. Eine erste gedachte Gerade verläuft durch den Mittelpunkt der ringförmigen Berührungsfläche und den Schwerpunkt der ersten Berührungsfläche. Eine zweite gedachte Gerade verläuft durch den Mittelpunkt der ringförmigen Berührungsfläche und den Schwerpunkt der zweiten Berührungsfläche. Die erste Gerade und die zweite Gerade können insbesondere einen Winkel von kleiner als 180° und/oder größer als 0° einschließen. Ein Mittelpunktswinkel zwischen der ersten Berührungsfläche und der zweiten Berührungsfläche auf der ringförmigen Berührungsfläche kann größer als 10° und/oder kleiner als 180° sein. Insbesondere kommen Winkel von größer als 20° in Frage, da kleinere Winkel die Auflösung der Berührungsflächen erschweren können. Ein Umfangsabstand zwischen der ersten Berührungsfläche und der zweiten Berührungsfläche auf der ringförmigen Berührungsfläche ist vorzugsweise größer als 5 mm. Ein Umfangsabstand zwischen der ersten Berührungsfläche und der zweiten Berührungsfläche auf der ringförmigen Berührungsfläche kann größer als der Abstand zwischen benachbarten Sensoren der Sensormatrix sein. Typischerweise ist der Abstand zwischen benachbarten Sensoren der Sensormatrix größer als 5 mm, z.B. 7 mm.

Die Markierung kann mindestens zwei unterschiedlich große Berührungsflächen und/oder zwei unterschiedlich geformte Berührungsflächen umfassen. Die Form ist hierbei als gleichbleibend zu verstehen, wenn bei einer Vergrößerung oder Verkleinerung der Berührungsfläche das Verhältnis von Breiten und Längen der Berührungsfläche gleich bleibt. Die Berührungsflächen der Markierung können somit bei gleicher Form eine unterschiedliche Größe haben und/oder bei gleicher Größe eine unterschiedliche Form aufweisen.

Die mindestens eine Berührungsfläche kann an die ringförmige Berührungsfläche angrenzen. Es kann vorgesehen sein, dass eine Umrandung der Berührungsfläche der Markierung durch einen Kreisbogen der ringförmigen Berührungsfläche begrenzt ist.

Typischerweise ist ein Verhältnis von leitender Fläche zu nicht-leitender Fläche innerhalb der ringförmigen Berührungsfläche kleiner als 0,8, insbesondere kleiner als 0,6, vorzugsweise kleiner als 0,3. Hierdurch kann eine Identifikation der Markierung durch den berührungsempfindlichen Bildschirm vereinfacht werden. Falls nämlich das Verhältnis bei zwei unterschiedlichen Anordnungen z.B. größer als 0,8 ist, können die Markierungen dieser Anordnungen unter Umständen nicht mehr auseinander gehalten und voneinander unterschieden werden.

Ein äußerer Durchmesser der ringförmigen Berührungsfläche ist vorzugsweise auf den Sensordrahtabstand (Abstand der Elektrodenleitungen) im berührungsempfindlichen Bildschirm abgestimmt. Der äußere Durchmesser sollte hierbei etwas größer als der Sensordrahtabstand sein. Der Sensordrahtabstand ist wiederum bei den meisten berührungsempfindlichen Bildschirmen so gewählt, dass eine Fingerspitze mit einer Breite von etwa 10 mm zuverlässig detektiert werden kann. Die meisten kapazitiven berührungsempfindlichen Bildschirme verfügen über Sensordrähte, die einen Abstand von etwa 5 mm bis 8 mm, wie z.B. 7 mm haben. Ein äußerer Durchmesser der ringförmigen Berührungsfläche kann daher z.B. mindestens 10 mm sein. Ein Maximalwert des äußeren Durchmessers ist prinzipiell nicht begrenzt, sollte aber kleiner als die horizontalen bzw. vertikalen Abmessungen des berührungsempfindlichen Bildschirms sein. Eine Breite der ringförmigen Berührungsfläche kann kleiner als eine größte Ausdehnung der mindestens einen Berührungsfläche der Markierung sein.

Wie oben angedeutet, kann die Markierung zum Brechen der Rotationssymmetrie der ringförmigen Berührungsfläche bzw. der elektrisch leitfähigen Struktur ausgestaltet sein. Trotz der ringförmigen Berührungsfläche hat die elektrisch leitfähige Struktur aufgrund der Markierung in manchen Ausführungsformen keine Drehsymmetrieachse und/oder höchstens eine C_{S}-Symmetrie (Spiegelsymmetrie), d.h. das zweidimensionale Berührungsmuster der elektrisch leitfähigen Struktur besitzt keine Drehsymmetrie.

Die Markierung kann alternativ oder zusätzlich zur oben beschriebenen Berührungsfläche auch eine Öffnung der ringförmigen Berührungsfläche umfassen oder sein. Die genannte Öffnung kann z.B. einen Öffnungswinkel von mindestens 5° und/oder mindestens 10° und/oder mindestens 20° und/oder mindestens 30° haben. Die genannte Öffnung kann einen Öffnungswinkel von höchstens 150° und/oder höchstens 120° und/oder höchstens 90° und/oder höchstens 60° und/oder höchstens 45° und/oder höchstens 40° und/oder höchstens 35° haben. Wie groß oder klein der Öffnungswinkel gewählt werden kann, hängt mit der Empfindlichkeit des berührungsempfindlichen Bildschirms zusammen. Der maximale Wert des Öffnungswinkels soll gewährleisten, dass die ringförmige Berührungsfläche noch als solche erkannt werden kann. Der minimale Wert des Öffnungswinkels hängt von der Empfindlichkeit der Sensormatrix, z.B. einem Sensordrahtabstand der Sensormatrix, ab.

Die elektrisch leitfähige Struktur kann im Wesentlichen als flache, zweidimensionale Struktur ausgebildet sein. Mit anderen Worten kann eine Dicke der elektrisch leitfähigen Struktur mindestens um einen Faktor 10 kleiner sein als eine Länge und/oder Breite der Struktur. Die Dicke hängt insbesondere von den verwendeten Materialien ab. Falls Farbe, Tinte oder Lack als elektrisch leitfähige Struktur verwendet wird, beträgt eine typische Dicke der elektrisch leitfähigen Struktur etwa mindestens 0,01 mm und/oder höchstens 0,1 mm. Falls eine ITO Material verwendet wird, kommt eine Dicke von mindestens 5 nm und/oder höchstens 500 nm in Frage.

Die elektrisch leitfähige Struktur kann eine elektrisch leitfähige Farbe oder einen elektrisch leitfähigen Lack umfassen oder sein. Die elektrisch leitfähige Struktur kann z.B. mittels Siebdruck auf das Trägermaterial aufgedruckt sein.

In einer Ausführungsform haben die Anordnung und/oder die Struktur und/oder das Trägermaterial im sichtbaren Wellenlängenbereich 400 nm - 700 nm einen optischen Transmissionsgrad von mindestens 75%. Typischerweise ist der Transmissionsgrad mindestens 80%, insbesondere mindestens 85%.

In einer weiteren Ausführungsform kann die elektrisch leitfähige Struktur insbesondere Indiumzinnoxid (ITO) umfassen oder sein. Ein ITO hat typischerweise einen optischen Transmissionsgrad im Bereich von 80% bis etwa 90%. ITO ist als dünne Kunststofffolie erhältlich, die auf der einen Seite elektrisch leitfähig und auf der anderen Seite elektrisch isolierend ist. Ein ITO kann z.B. mit einem Lasercutter bearbeitet werden.

In anderen Ausführungsformen umfasst oder ist die elektrisch leitfähige Struktur zum Beispiel eine Metallfolie oder eine Metallplatte, welche besonders dünn ausgeführt sein kann. Geeignete elektrisch leitfähige Materialien wären zum Beispiel Kupfer, Aluminium oder Edelstahl.

Die elektrisch leitfähige Struktur kann auf dem Trägermaterial aufgedruckt, geklebt oder sonstig aufgebracht sein. Die elektrisch leitfähige Struktur kann z.B. stoffschlüssig, formschlüssig und/oder kraftschlüssig mit dem Trägermaterial verbunden sein.

Das Trägermaterial kann Kunststoff umfassen oder sein. Das Trägermaterial umfasst z.B. ein polymeres Material wie PET, Polyacrylat oder Polycarbonat. Die Wahl des Trägermaterials kann vom Material der elektrisch leitfähigen Struktur abhängig sein. Falls z.B. elektrisch leitfähige Farbe verwendet wird, die bei 60 °C bis 100 °C ausgehärtet wird, muss das Trägermaterial diese Temperatur aushalten. Polycarbonat bleibt z.B. chemisch stabil bei einer Temperatur von 60 °C. Andere Materialien wie Textil, Papier oder Pappe sind auch denkbare Trägermaterialien.

Die Anordnung kann eine Schutzschicht aufweisen, welche das elektrisch leitfähige Material und das Trägermaterial überdeckt. Eine Dicke der Schutzschicht sollte derart gewählt werden, dass eine Detektion der elektrisch leitfähigen Struktur durch die Schutzschicht hindurch trotzdem möglich ist. Das Trägermaterial kann ebenfalls als Schutzschicht ausgebildet sein.

Die Anordnung kann ein Befestigungsmittel aufweisen, welches dazu ausgestaltet ist, die Anordnung an einem weiteren von der Anordnung verschiedenen Element zu befestigen. Das Befestigungsmittel kann z.B. auf einer der elektrisch leitfähigen Struktur gegenüberliegenden Seite der Anordnung angeordnet sein. Das Befestigungsmittel kann auch auf der Seite der elektrisch leitfähigen Struktur angeordnet sein, z.B. wenn das Trägermaterial als Schutzschicht ausgebildet ist. Das Trägermaterial kann also wahlweise an der Unterseite oder an der Oberseite der Anordnung angeordnet sein. Die Unterseite wird hierbei typischerweise für die Kontaktierung mit der Sensormatrix / dem berührungsempfindlichen Bildschirm verwendet. Die Unterseite der Anordnung ist typischerweise im Wesentlichen flach, d.h. eine im Wesentlichen zweidimensionale Struktur ohne größere Erhebung oder Vertiefung. In einer Ausführungsform weist die Anordnung eine Klebeschicht als Befestigungsmittel auf.

Die oben beschriebene Anordnung kann zum Beispiel mittels des nachstehenden Verfahrens hergestellt werden.

Das Verfahren zum Herstellen der Anordnung umfasst die Schritte:
- Bereitstellen eines elektrisch isolierenden Trägermaterials,
- Aufbringen eines elektrisch leitfähigen Materials auf das Trägermaterial oder in das Trägermaterial,
- Bilden der elektrisch leitfähigen Struktur,
- Bilden der Anordnung.

In einer vorteilhaften Ausführungsform ist das elektrisch leitfähige Material eine elektrisch leitfähige Farbe oder ein elektrisch leitfähiger Lack. In diesem Fall kann das elektrisch leitfähige Material z.B. mittels Siebdruck auf das Trägermaterial aufgebracht werden. Für das Trägermaterial kommen dann Materialien in Frage, die in einem Siebdruckverfahren verwendet werden können. Bei Verwendung eines elektrisch leitfähigen Anstrichmittels, wie Farbe oder Lack, kann dieses durch Rollen, Streichen und/oder Sprühen auf das Trägermaterial aufgebracht werden.

Alternativ kann das elektrisch leitfähige Material als Schicht oder als vorgefertigte Schicht auf das Trägermaterial aufgebracht werden und dieses beispielsweise teilweise oder vollständig bedecken. Die elektrisch leitfähige Struktur kann durch Abtragen eines Teils der elektrisch leitenden Schicht, insbesondere durch Abkratzen oder Weglasern, gebildet werden. Die elektrisch leitfähige Schicht kann aus einem ITO (s. oben) gebildet sein.

Alternativ wird die elektrisch leitfähige Schicht oder Struktur oder das elektrisch leitfähige Material auf das Trägermaterial aufgeklebt.

Die elektrisch leitfähige Struktur kann z.B. stoffschlüssig, formschlüssig und/oder kraftschlüssig mit dem Trägermaterial verbunden werden.

Außerdem wird mit der Erfindung eine Gruppe von Anordnungen vorgeschlagen. Jede Anordnung der Gruppe weist eine unterschiedlich ausgestaltete elektrisch leitfähige Struktur auf. Beispielsweise weist jede elektrische Struktur jeweils eine unterschiedlich ausgestaltete Markierung und eine gleiche ringförmige Berührungsfläche auf. In einer Ausgestaltung ist der äußere Umriss oder die äußere Umrandung jeder elektrisch leitfähigen Struktur der Gruppe gleich, und kann insbesondere durch den Umriss oder Umrandung der ringförmigen Berührungsfläche gebildet sein. Die jeweils unterschiedlichen Markierungen können dann innerhalb der ringförmigen Berührungsfläche vorgesehen sein. Jede Anordnung der Gruppe kann durch einen unterschiedlichen Umfangsabstand oder Mittelpunktswinkel der ersten und zweiten Berührungsflächen relativ zueinander gekennzeichnet sein. Jede Anordnung der Gruppe kann durch eine bestimmte Größe oder Form der Berührungsflächen innerhalb der ringförmigen Berührungsfläche ausgestaltet sein. Insbesondere kann jede Anordnung der Gruppe ausgestaltet sein, ein charakteristisches Berührungsmuster in der Sensormatrix bzw. dem Bildschirm zu erzeugen, welches sich von den Berührungsmustern der übrigen Anordnungen der Gruppe unterscheidet. Das Berührungsmuster kann auch als Kapazitätsmuster bezeichnet werden.

Es sei betont, dass Merkmale, die z.B. nur in Bezug auf die Anordnung genannt wurden, auch für die Anordnungen der Gruppe beansprucht werden können und anders herum. Weiter kann mit den oben beschriebenen Herstellungsverfahren auch die Gruppe von Anordnungen hergestellt werden.

Außerdem wird ein Eingabeelement für eine berührungsempfindliche Sensormatrix und/oder einen berührungsempfindlichen Bildschirm vorgeschlagen. Das Eingabeelement weist ein Gehäuse und die oben beschriebene Anordnung auf, wobei die Anordnung an einer Unterseite des Gehäuses angeordnet ist. Die Anordnung kann derart am Gehäuse befestigt sein, dass die elektrisch leitfähige Struktur beim Auflegen des Eingabeelements die Sensormatrix bzw. den berührungsempfindlichen Bildschirm berührt oder zumindest in der Sensormatrix bzw. dem berührungsempfindlichen Bildschirm Kapazitätsänderungen hervorruft. Das Eingabeelement kann als passives Eingabeelement ohne Elektronik und ohne Stromversorgung ausgestaltet sein. Alternativ kann das Eingabeelement als aktives Eingabeelement mit Elektronik und/oder Stromversorgung ausgestaltet sein. Beispielshafte aktive Eingabeelemente sind in der Veröffentlichung WO 2018/134418 A1 gezeigt.

Außerdem wird ein System vorgeschlagen, umfassend die oben beschriebe Anordnung. Das System weist außerdem eine Steuer- und Verarbeitungseinheit für eine Sensormatrix bzw. einen berührungsempfindlichen Bildschirm auf. Die Steuer- und Verarbeitungseinheit umfasst z.B. eine Kommunikationseinheit, einen Prozessor und/oder einen Speicher.

Wie oben angedeutet, ist die elektrisch leitfähige Struktur der Anordnung ausgebildet, bei einem Auflegen der Anordnung auf eine berührungsempfindliche Sensormatrix bzw. einen berührungsempfindlichen Bildschirm Kapazitätsänderungen zu verursachen, die durch kapazitive Sensoren der Sensormatrix bzw. des berührungsempfindlichen Bildschirms als Sensordaten detektierbar sind. Die Steuer- und Verarbeitungseinheit ist dazu ausgelegt, die Sensordaten zu empfangen und die Anordnung anhand der elektrisch leitfähigen Struktur zu erkennen.

Die Steuer- und Verarbeitungseinheit kann dazu eingerichtet sein, Sensordaten, die mittels kapazitiver Sensoren der Sensormatrix bzw. des berührungsempfindlichen Bildschirms detektiert werden, zu empfangen. Mit den kapazitiven Sensoren können Kapazitätsänderungen detektiert werden, die durch die elektrisch leitfähige Struktur von einer den Bildschirm kontaktierenden Anordnung oder von einer auf den Bildschirm aufgelegten Anordnung versursacht werden. Diese Detektion umfasst typischerweise eine ortsaufgelöste Bestimmung der Größe der so verursachten Kapazitätsänderungen.

Optional erstellt die Steuer- und Verarbeitungseinheit dann ein Kapazitätsmuster für die elektrisch leitfähige Struktur der Anordnung, wobei das Kapazitätsmuster eine ortsaufgelöste Darstellung mindestens zwei verschieden großer Kapazitätsänderungen oder mindestens drei paarweise verschieden großer Kapazitätswerte oder davon abgeleiteter Größen enthält. Anschließend kann das Kapazitätsmuster in dem Speicher gespeichert werden.

Durch die kapazitiven Sensoren wird eine Erfassung von Größen von Kapazitätsänderungen, die an unterschiedlichen Orten in unterschiedlicher Stärke durch die elektrisch leitfähige Struktur ausgelöst werden, ermöglicht. Somit können in dem Kapazitätsmuster, ähnlich wie bei einem Graustufenbild, Magnituden der Kapazitätsänderungen an verschiedenen Orten abgebildet werden und nicht nur ein Ort, an dem eine Kapazitätsänderung auftritt. Das Kapazitätsmuster umfasst also, wie erwähnt, mindestens zwei verschieden große Kapazitätsänderungen an unterschiedlichen Orten und enthält ihre relative Position, also beispielsweise ihren Abstand. Die mindestens zwei verschiedenen Kapazitätsänderungen enthalten in der Regel also zumindest die Informationen aus zwei verschiedenen Schwarz-Weiß-Bildern mit unterschiedlichen Kapazitätsänderungs-Schwellen. In möglichen Ausführungen werden die Kapazitätsmuster als Graustufenbild mit mindestens zwei Graustufen oder als mindestens zwei Schwarz-Weiß Bilder mit unterschiedlichen Schwellen gespeichert.

Hierbei können zur Einstellung der Schwellen beispielsweise sogenannte Adaptive Thresholding-Verfahren zum Einsatz kommen, wobei ein Schwellenwert für einen Pixel aus Signalen aus der Umgebung des Pixels errechnet wird. Derartige Verfahren ermöglichen insbesondere eine Erkennung mehrerer Anordnungen (weiter unten wird diese Möglichkeit ausführlich erläutert), wenn deren elektrisch leitfähige Strukturen aufgrund ihrer Ausgestaltung oder aufgrund ihrer Ausrichtung bezüglich des Gitters des berührungsempfindlichen Bildschirms verschieden starke Signale auslösen. Es ist auch möglich durch Adaptive Thresholding unterschiedliche Bereiche einer einzigen Anordnung, in denen die elektrisch leitfähige Struktur der Anordnung unterschiedlich starke Signale erzeugt, mit einem unterschiedlichen Threshold zu detektieren.

Der berührungsempfindliche Bildschirm kann dazu eingerichtet sein, Kapazitätsänderungen von 10 pF oder weniger zu erfassen. Beispielsweise sind in möglichen Ausführungen Kapazitätsänderungen von 3 pF, vorzugsweise von 1 pF, besonders bevorzugt von 0,1 pF detektierbar. Eine Glasdicke des Berührungsempfindlichen Bildschirms kann beispielsweise 4 mm oder weniger betragen.

Damit wird durch das Kapazitätsmuster ein differenziertes charakteristisches Bild der elektrisch leitfähigen Struktur erfasst, was einerseits, ähnlich wie ein Fingerabdruck, ein Erkennungsmerkmal darstellt, und andererseits eine Verfolgung der Anordnung auf dem Bildschirm und eine Detektion einer Orientierung der Anordnung auf dem Bildschirm ermöglicht. Eine Analyse und Verarbeitung der so gespeicherten bzw. verfolgten Kapazitätsmuster kann mit Methoden der Bildverarbeitung durch die Steuer- und Verarbeitungseinheit vorgenommen werden. Zur Bestimmung des beschriebenen Kapazitätsmusters werden die Positionen der hervorgerufenen Kapazitätsänderungen zumindest relativ zueinander erfasst.

Es kann zum Beispiel vorkommen, dass die ringförmige Berührungsfläche ein stärkeres Signal auslöst, als die Markierung. Die Steuer- und Verarbeitungseinheit kann dann ausgestaltet sein, in einem ersten Schritt festzustellen, dass die ringförmige Berührungsfläche den berührungsempfindlichen Bildschirm kontaktiert. Durch Vergleich mit vorbekannten Kapazitätsmustern kann die ringförmige Berührungsfläche anhand ihres ringförmigen Umrisses und/oder ihres charakteristischen Kapazitätsmusters erkannt werden. Hierdurch kann relativ schnell festgestellt werden, dass überhaupt eine Anordnung auf dem Bildschirm aufliegt und/oder diesen kontaktiert. Ebenfalls kann damit in erster Näherung die Position der Anordnung auf dem Bildschirm ermittelt werden. Durch eine weitere Messung mit einem unterschiedlichen Schwellenwert kann die Markierung detektiert und erkannt werden. Durch Vergleich mit vorbekannten Mustern kann dann die Identität der Anordnung bzw. der Markierung festgestellt werden. Mithilfe der Markierung kann außerdem eine Orientierung (Drehwinkel) der Anordnung auf dem Bildschirm festgestellt werden.

Typischerweise werden Kapazitätsänderungen, die von einer einzigen Anordnung ausgelöst werden, an mindestens fünf Orten oder mindestens fünf Kreuzungspunkten der Sensormatrix detektiert. Die Anzahl kann mindestens 10 und/oder mindestens 20 Orte bzw. Kreuzungspunkte sein.

Zum Beispiel mit einer Auflösung von mindestens 1 Pixel pro 35 mm² vorzugsweise mit einer Auflösung von mindestens 1 Pixel pro 15 mm², besonders bevorzugt mit einer Auflösung von mindestens 1 Pixel pro 6,8 mm². Beispielsweise kann der Berührungsempfindliche Bildschirm eine Bildschirmdiagonale von zwischen 10 und 100 Zoll aufweisen. In einer Ausführung hat der berührungsempfindliche Bildschirm eine Bildschirmdiagonale 55 Zoll, mit Abmessungen von 1220mm x 680 mm und verfügt über 172 x 105 Pixel, an denen die Sensordaten erhoben und somit die leitende Struktur der Anordnung detektiert werden kann. Eine Sensorfläche geteilt durch die Anzahl der Kreuzungspunkte kann ein Maß für die Empfindlichkeit darstellen.

Wie eingangs erwähnt, können kapazitive Sensoren bestimmte Strukturen oder Objekte detektieren, auch wenn sie nicht angefasst werden (passiv). Es hat sich herausgestellt, dass mit der vorgeschlagenen Steuer- und Verarbeitungseinheit für den berührungsempfindlichen Bildschirm leitende Strukturen der oben beschriebenen Anordnung erfasst werden können und ihr Kapazitätsmuster aufgenommen werden kann, auch wenn die Anordnung nicht berührt wird. Das wird insbesondere durch die hier beschriebene Ausgestaltung des Kapazitätsmusters und die beschriebene Verwendung der kapazitiven Sensoren erreicht.

Die vorgeschlagene Steuer- und Verarbeitungseinheit kann dazu eingerichtet sein, auch eine Position der abgelegten Anordnung auf dem berührungsempfindlichen Bildschirm zu bestimmen, wenn die Anordnung auf dem Bildschirm abgelegt wurde. Das umfasst neben der für das Kapazitätsmuster notwendigen Bestimmung einer relativen Position der durch die Anordnung hervorgerufenen Kapazitätsänderungen auch eine Bestimmung einer absoluten Position der Eingabeeinheit auf dem berührungsempfindlichen Bildschirm. Dafür wird zumindest ein Punkt des Kapazitätsmusters einem Ort auf dem berührungsempfindlichen Bildschirm, an dem die entsprechende Kapazitätsänderung erfolgt, zugeordnet. Hierfür können entsprechend ein Graustufenbild oder ein oder mehrere Schwarz-Weiß Bilder aufgenommen werden, die nicht nur den Bereich, in dem die Kapazitätsänderungen hervorgerufen werden umfassen, sondern die den ganzen Bildschirm umfassen. Typischerweise wird zur Positionsbestimmung eine Position eines Umrisses oder äußeren Randes der ringförmigen Berührungsfläche auf dem Bildschirm detektiert. Die Position des Umrisses kann beispielsweise aus einem von mehreren aufgenommenen Schwarz-Weiß Bildern extrahiert werden. Beispielsweise kann eine Detektion des Umrisses aus dem Schwarzweißbild mit dem niedrigsten Schwellenwert erfolgen.

Aus Schwarzweißbildern mit höherem Schwellenwert, bei denen die elektrisch leitfähige Struktur in Relation zu dem gesamten Bildschirm erfasst wird, kann dann mithilfe der Markierung außer der Position auch noch eine Orientierung der Anordnung detektiert werden. Je nach Schwellenwert wird ein unterschiedlicher Kontrast und Detailgrad erreicht, so dass es möglich ist, die elektrisch leitfähige Struktur durch zusätzliche Schwellenwerte besser aufzulösen.

Die vorgeschlagene Steuer- und Verarbeitungseinheit ermöglicht es, unterschiedliche Strukturen unterschiedlicher Anordnungen zu erkennen. Da sich die durch die unter-schiedlichen Strukturen der unterschiedlichen Anordnungen ausgelösten Kapazitätsänderungen voneinander unterscheiden können, ist typischerweise vorgesehen, dass die Steuer- und Verarbeitungseinheit dazu eingerichtet ist, auf die unterschiedlich starken Kapazitätsänderungen zu reagieren. Es kann vorgesehen sein, dass die Steuer- und Verarbeitungseinheit in einem ersten Detektionsschritt ausgebildet ist, vordefinierte Schwellenwerte für die Kapazitätsänderungen zu verwenden.

Die Steuer- und Verarbeitungseinheit kann dazu eingerichtet sein, detektierte Kapazitätsmuster der Anordnung mit vorbekannten Kapazitätsmustern zu vergleichen. Die Steuer- und Verarbeitungseinheit kann zum Beispiel in einem ersten Schritt ein grobes Kapazitätsmuster mit wenigen Schwellenwerten aufnehmen. Das kann Geschwindigkeitsvorteile mit sich bringen. Aufgenommene Kapazitätsmuster können mit den bekannten Kapazitätsmustern verglichen werden, wobei die bekannten Kapazitätsmuster beispielsweise mit Methoden des maschinellen Lernens erfasst wurden. Das ermöglicht dann beispielsweise eine Bestimmung der ringförmigen Berührungsfläche und/oder eine Bestimmung eines Typs der Anordnung. So muss die Anordnung nicht beim Auflegen komplett vermessen werden, sondern nur so weit, bis eine Zuordnung zu einem vorbekannten Typ oder Anordnung möglich ist.

Daten, die für vorbekannte Anordnungen im Speicher vorhanden sein können, können dabei zum Beispiel typische Kapazitätsänderungen, die beim Auflegen verursacht werden, und auch weitere Daten umfassen, die bei der Verwendung der Steuer- und Verarbeitungseinheit hilfreich sein können. So kann beispielsweise gespeichert sein, welche Art von Kapazitätsveränderungen für eine bestimmte Anordnung beim Auflegen, Loslassen, Drehen oder Abheben charakteristisch sind. Die Steuer- und Verarbeitungseinheit verfügt beispielsweise über Informationen darüber, welche Signale eine bestimmte Anordnung auslöst, wenn sie losgelassen oder bewegt oder gedreht wird, und/oder über Informationen darüber, wie sich ein von einer Anordnung ausgelöstes Signal abhängig von ihrer Orientierung verändert.

Die Steuer- und Verarbeitungseinheit kann zur Bestimmung einer Orientierung der Anordnung aus dem Kapazitätsmuster eingerichtet sein, insbesondere anhand der Markierung der elektrisch leitfähigen Struktur. Wie erwähnt, wird die Position der Anordnung erfasst, indem die absolute Position der durch sie hervorgerufenen Kapazitätsveränderungen in Bezug auf die Gesamtabmessungen des berührungsempfindlichen Bildschirms aus den Sensordaten extrahiert wird. Während für die Bestimmung der Position beispielsweise ein einziges Schwarzweißbild mit niedrigem Schwellenwert bzw. eine Verwendung des niedrigsten Schwellenwerts eines Graustufenbilds notwendig ist, kann es zur Bestimmung der Orientierung nötig sein, mehrere Bilder bzw. Grauwerte zu verwenden oder eines aus mehreren Bildern auszuwählen.

Es ist hierfür vorteilhaft, wenn auf dem zur Bestimmung der Orientierung verwendeten Schwarzweißbild oder innerhalb der zur Bestimmung der Orientierung verwendeten Graustufe durch die Kapazitätsänderungen ein Muster mit gebrochener, möglichst niedriger Symmetrie oder Rotationssymmetrie erkennbar ist. Da manche der oben beschriebenen Markierungen der Anordnung die Rotationssymmetrie der ringförmigen Berührungsfläche brechen, wird für die Bestimmung der Orientierung der Anordnung vorzugsweise die Markierung verwendet. Die Markierung ist hierbei derart ausgestaltet, dass die Anordnung auch bei Drehung der Anordnung von anderen Anordnungen unterschieden werden kann. Mit anderen Worten können die Anordnungen durch Vorsehen unterschiedlicher Markierungen voneinander unterschieden werden. Weiter erlaubt die Markierung insbesondere eine Unterscheidung von unterschiedlichen Drehpositionen einer einzigen Anordnung. Somit kann die Orientierung der Anordnung relativ zur Sensormatrix mithilfe der Markierung festgestellt werden.

Durch Verwendung vorbekannter, mit Hilfe maschinellen Lernens erstellter Daten, kann für eine bestimmte Anordnung a priori bekannt sein, welcher Schwellenwert geeignet ist, um derartige Muster mit möglichst niedriger Symmetrie zu erhalten. Symmetrien müssen dann nicht für eine neu aufgelegte Anordnung neu untersucht werden, sondern es muss nur die oben beschriebene Identifikation vorgenommen werden. Typischerweise wird die Anordnung zumindest beim Auflegen und beim Bewegen berührt, so dass zumindest dann die Detektion der elektrisch leitfähigen Strukturen vereinfacht werden kann. Dieser Aspekt kann hier ebenfalls ausgenutzt werden. Es sei jedoch betont, dass die Anordnung vorzugsweise so konzipiert ist, dass eine Berührung durch den Benutzer nicht mehr notwendig ist.

Die hier vorgeschlagene Steuer- und Verarbeitungseinheit kann dazu eingerichtet sein, Rotationen und/oder Translationen der Anordnung auf dem Bildschirm zu verfolgen, wenn die Anordnung auf dem Bildschirm abgelegt wurde. Dies kann ähnlich wie bei der oben beschriebenen Positionsbestimmung durch Auswerten der Sensordaten geschehen.

Wie erwähnt, besteht die Möglichkeit, dass die Steuer- und Verarbeitungseinheit mehrere Anordnungen gleichzeitig erfasst, wie zum Beispiel die oben erwähnte Gruppe von Anordnungen. Mögliche weitere Anordnungen weisen dabei typischerweise unterschiedlich ausgestaltete elektrisch leitfähigen Strukturen wie die oben beschriebene Anordnung, die als erste Anordnung bezeichnet werden kann, auf, und wechselwirken auf die gleiche Weise mit der Steuer- und Verarbeitungseinheit.

So kann festgestellt werden, ob es sich bei einem auf den Bildschirm abgelegten weiteren Objekt um die mindestens eine weitere Anordnung handelt und also überprüft werden, ob die mindestens eine weitere Anordnung auf dem Bildschirm abgelegt wurde.

Für die elektrisch leitfähige Struktur der weiteren Anordnung wird dann auch ein Kapazitätsmuster erstellt, gespeichert und/oder verglichen mit vorbekannten Kapazitätsmustern.

Eine Zuordnung der Anordnungen erfolgt dann typischerweise über die unterschiedlich ausgestalteten elektrisch leitfähigen Strukturen, insbesondere über die unterschiedlich ausgestalteten Markierungen.

Die Steuer- und Verarbeitungseinheit kann dazu eingerichtet sein, den berührungsempfindlichen Bildschirm basierend auf den Sensordaten anzusteuern oder Eingabesignale des berührungsempfindlichen Bildschirms zu empfangen, insbesondere dann, wenn die Anordnung auf dem Bildschirm abgelegt wurde.

Ein weiteres System, welches hier vorgeschlagen wird, umfasst einen berührungsempfindlichen Bildschirm, insbesondere den zuvor beschriebenen berührungs-empfindlichen Bildschirm, eine Steuer- und Verarbeitungseinheit, insbesondere die zuvor beschriebene Steuer- und Verarbeitungseinheit, und eine Anordnung, insbesondere die zuvor beschriebene Anordnung.

In einem solchen System umfasst der berührungsempfindliche Bildschirm kapazitive Sensoren zur Erhebung von Sensordaten. Der berührungsempfindliche Bildschirm kann als Tisch ausgebildet sein, wobei der Bildschirm beispielsweise die Tischplatte bildet. Die Anordnung umfasst eine elektrisch leitfähige Struktur, die bei einem Auflegen der Anordnung auf einen berührungsempfindlichen Bildschirm lokale Kapazitätsänderungen verursacht, die durch die kapazitiven Sensoren des berührungsempfindlichen Bildschirms detektierbar sind.

Die Steuer- und Verarbeitungseinheit ist dazu eingerichtet, anhand der Kapazitätsänderungen zu überprüfen, ob ein Kontaktieren oder Ablegen der Anordnung detektiert wurde. Die Steuer- und Verarbeitungseinheit kann ein Kapazitätsmuster für die leitende Struktur der Eingabeeinheit erstellen und speichern, wobei das Kapazitätsmuster eine ortsaufgelöste Darstellung mindestens zwei verschieden großer Kapazitätsänderungen oder mindestens drei paarweise verschieden großer Kapazitätswerte oder davon abgeleiteter Größen enthält.

Es sei angemerkt, dass das System auch mehrere Sensormatrices bzw. berührungsempfindliche Bildschirme umfassen kann, zum Beispiel zwei berührungsempfindliche Bildschirme oder zehn berührungsempfindliche Bildschirme. Der eine oder die mehreren berührungsempfindlichen Bildschirme können jeweils mit Kabel oder, z.B. wenn sie sich weiter entfernt von der Steuer- und Verarbeitungseinheit befinden oder Kabel unerwünscht sind, auch per Drahtlosverbindung, wie zum Beispiel WLAN, Bluetooth oder ein Mobilfunknetz mit der Steuer- und Verarbeitungseinheit verbunden sein. Die Steuer- und Verarbeitungseinheit ist dann typischerweise dazu eingerichtet, mit den zusätzlichen Bildschirmen ebenso wie mit dem ersten berührungsempfindlichen Bildschirm zu interagieren. In solchen Szenarien ist es zusätzlich möglich, dass auch eine Wechselwirkung zwischen den mehreren Bildschirmen vorgesehen ist, also eine Aktion die einen ersten der mehreren berührungsempfindlichen Bild-schirme betrifft eine weitere Aktion auslöst, die einen anderen der mehreren berührungsempfindlichen Bildschirme betrifft.

Ein Verfahren zur Verwendung einer berührungsempfindlichen Sensormatrix im Sinne dieser Anmeldung, bzw. eines wie oben beschriebenen Systems, umfasst zumindest die folgenden Schritte:
- Detektieren von Kapazitätsänderungen durch kapazitive Sensoren einer berührungsempfindlichen Sensormatrix, wobei die Kapazitätsänderungen durch eine elektrisch leitfähige Struktur einer die Sensormatrix kontaktierenden Anordnung verursacht werden.
- Erstellen eines Kapazitätsmusters für die leitende Struktur der Anordnung.
- Vergleichen des aufgenommenen Kapazitätsmusters mit vorbekannten Kapazitätsmustern.
- Erkennen der Anordnung auf der berührungsempfindlichen Sensormatrix.

Die Sensormatrix kann insbesondere Bestandteil des zuvor beschriebenen berührungsempfindlichen Bildschirms sein.

Mit anderen Worten können Sensordaten mittels kapazitiver Sensoren der Sensormatrix bzw. des berührungsempfindlichen Bildschirms generiert werden. Die mit den kapazitiven Sensoren erfassten Kapazitätsänderungen können als Sensordaten gespeichert werden. Das Kontaktieren der Sensormatrix bzw. des Bildschirms durch die Anordnung kann zum Beispiel durch Auflegen der Anordnung auf die Sensormatrix bzw. den berührungsempfindlichen Bildschirm erfolgen.

Das Kapazitätsmuster enthält insbesondere eine ortsaufgelöste Darstellung mindestens zwei verschieden großer Kapazitätsänderungen oder mindestens drei paarweise verschieden großer Kapazitätswerte oder davon abgeleiteter Größen. Das Kapazitätsmuster kann außerdem gespeichert werden.

Weitere Schritte des Verfahrens umfassen beispielsweise:
- Erkennen, anhand der ringförmigen Berührungsfläche der Anordnung, einer Position der Anordnung auf der Sensormatrix bzw. dem berührungsempfindlichen Bildschirm und/oder
- Erkennen, anhand der Markierung der Anordnung, einer Orientierung der Anordnung auf der Sensormatrix bzw. dem berührungsempfindlichen Bildschirm.

Durch ein solches Verfahren wird ebenfalls die eingangs formulierte Aufgabe gelöst. Mit dem Verfahren ist es möglich, eine Identität einer auf einer berührungsempfindlichen Sensormatrix bzw. einem berührungsempfindlichen Bildschirm aufgelegten bzw. abgelegten Anordnung zu überprüfen, ihren Ort und/oder ihre Orientierung auf der Sensormatrix bzw. dem Bildschirm festzustellen, sowie unterschiedliche Anordnungen für die Sensormatrix bzw. den berührungsempfindlichen Bildschirm, insbesondere durch Eingaben über Bewegungen der Anordnungen auf der Sensormatrix bzw. dem berührungsempfindlichen Bildschirm, bereitzustellen.

Es sei betont, dass Merkmale, die z.B. nur in Bezug auf die Anordnung, die Steuer- und Verarbeitungseinheit und/oder das System genannt wurden, auch für das genannte Verfahren beansprucht werden können und anders herum.

Für eine mögliche Detektion der Anordnung und/oder des Eingabeelements durch die Sensormatrix bzw. den berührungsempfindlichen Bildschirm sei ergänzend auf die europäischen Patentanmeldungen EP 18 168 536.3 und EP 18 701453.5 verwiesen.

Die Erfindung wird anhand der beigefügten Figuren erläutert. Es zeigen
- Fig. 1: eine Unteransicht einer Anordnung;
- Fig. 2: eine Unteransicht einer weiteren Anordnung;
- Fig. 3: einen Schnitt der Anordnung der Fig. 2;
- Fig. 4: einen Schnitt eines Eingabeelements mit der Anordnung der Figuren 2 und 3;
- Fig. 5: eine perspektivische Ansicht eines Systems, das ein Eingabeelement, einen berührungsempfindlichen Bildschirm sowie eine Steuer- und Verarbeitungseinheit umfasst;
- Fig. 6: verschiedene Ausführungsformen einer elektrisch leitfähigen Struktur
- Fig. 7: weitere Ausführungsformen einer elektrisch leitfähigen Struktur;
- Fig. 8: Unteransichten von zwei Anordnungen;
- Fig. 9: durch einen berührungsempfindlichen Bildschirm aufgenommene Kapazitätsmuster der Anordnungen der Fig. 8; und
- Fign. 10-16: durch einen berührungsempfindlichen Bildschirm aufgenommene Kapazitätsmuster einer Anordnung bei unterschiedlichen Orientierungen der Anordnung auf dem Bildschirm.

In den Figuren sind wiederkehrende oder ähnliche Merkmale mit denselben Bezugszeichen versehen.

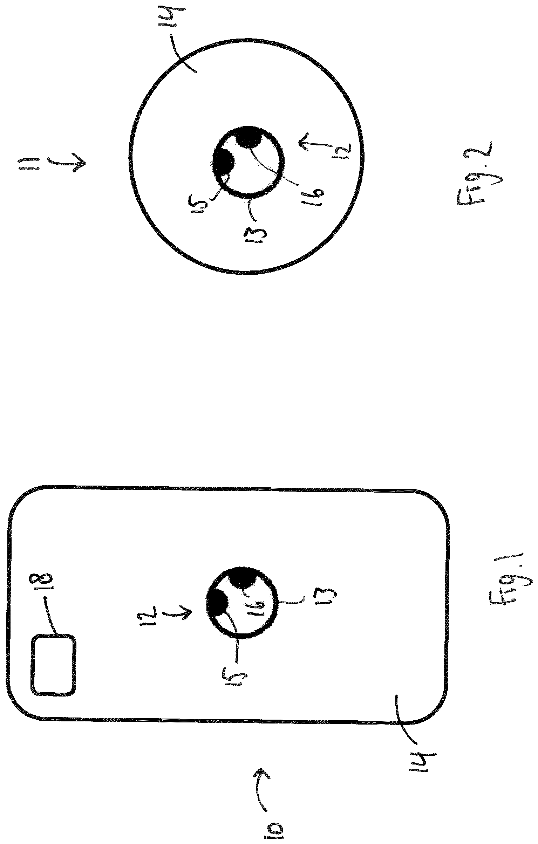

Die Fig. 1 zeigt eine Unteransicht einer Anordnung 10, welche zum Detektieren durch berührungsempfindliche Sensoren ausgestaltet ist. Die Anordnung 10 umfasst eine elektrisch leitfähige Struktur 12 und ein elektrisch isolierendes Trägermaterial 14 auf dem die Struktur 12 aufgebracht ist oder in das die Struktur 12 eingebettet ist. Das elektrisch isolierende Trägermaterial 14 unterstützt die Struktur 12 und dient als mechanische Halterung für die Struktur 12. Außerdem sorgt Trägermaterial 14 für eine elektrische Isolierung der elektrisch leitfähigen Struktur 12. Insbesondere kann die Anordnung 10 durch kapazitive Sensoren erkannt werden, wenn die Anordnung 10 diese Sensoren berührt. Die kapazitiven Sensoren sind hierbei vorzugsweise Bestandteil eines berührungsempfindlichen Bildschirms 40 (s. unten).

Das elektrisch isolierende Trägermaterial 14 kann z.B. als Kunststofffolie ausgestaltet sein, wobei die Kunststofffolie vorzugsweise im Wesentlichen aus einem weichen, elastischen Material gefertigt ist. Das elektrisch isolierende Trägermaterial 14 kann insbesondere ein polymeres Material aufweisen oder sein. Das polymere Material kann ein optisch transparentes Material wie Polyacrylat, Acrylglas (Polymethylmetacrylate, PMMA), Polycarbonat (PC), Polyvinylchlorid (PVC), Polystyrol (PS), Polyphenylenether (PPO), Polyethylen (PE) oder Polyethylenterephthalat (PET) oder Kombinationen aus diesen umfassen. Als solches kann das Trägermaterial 14 im sichtbaren Wellenlängenbereich 400 nm - 700 nm einen optischen Transmissionsgrad von mindestens 75% haben. Das Trägermaterial 14 kann auch Papier, Pappe oder Textil umfassen oder aus diesen Materialien gebildet sein.

In der gezeigten Ausführungsform ist die Anordnung 10 als Hülle eines elektronischen Eingabegerätes ausgebildet, wobei das elektronische Eingabegerät z.B. ein Handy wie ein Smartphone ist. Die Hülle 10 kann formschlüssig oder kraftschlüssig an das elektronische Eingabegerät befestigt werden. Im zusammengebauten Zustand bildet die Hülle 10 die Unterseite des Eingabegeräts. Die Hülle 10 weist eine Ausnehmung 18 auf, damit eine Kamera des Smartphones nicht durch die Hülle 10 versperrt wird. Falls das Trägermaterial 14 und/oder die Struktur 12 ein transparentes Material enthalten, kann auf die Ausnehmung 18 verzichtet werden.

Die elektrisch leitfähige Struktur 12 weist eine ringförmige Berührungsfläche 13 sowie eine Markierung 15, 16, 17 auf. Hierbei ist die Markierung 15, 16, 17 zum Brechen der Rotationssymmetrie der ringförmigen Berührungsfläche 13 ausgestaltet.

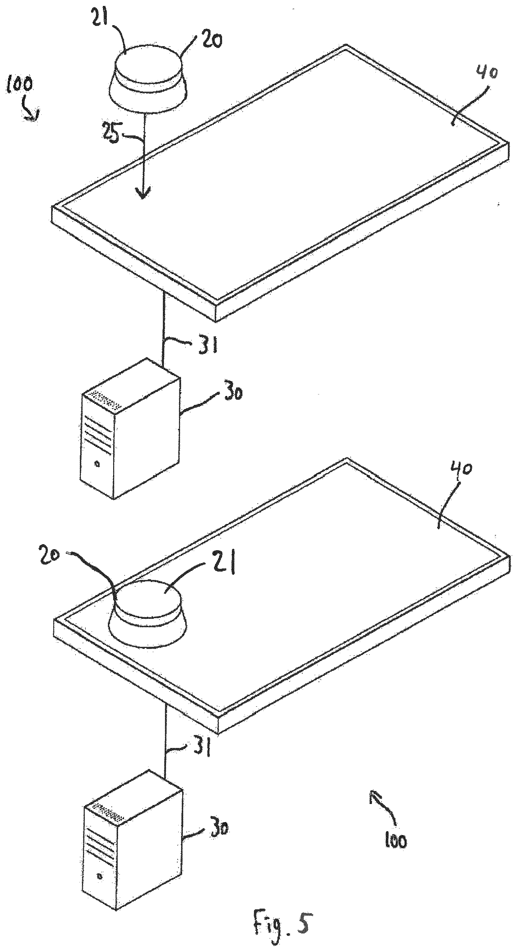

In der Ausführungsform der Fig. 1 ist die Markierung in Form von zwei Berührungsflächen 15, 16 vorgesehen. Die zwei Berührungsflächen 15, 16 sind innerhalb der ringförmigen Berührungsfläche 13 angeordnet und elektrisch leitend mit der ringförmigen Berührungsfläche 13 verbunden. Die leitende Struktur 12 bildet somit eine Anordnung zumindest teilweise miteinander leitend verbundener leitender Komponenten 13, 15, 16. Die Struktur 12 ist mittels berührungsempfindlicher kapazitiver Sensoren eines Touchscreens 40 detektierbar, wie im Zusammenhang mit der Figur 5 noch weiter ausgeführt wird.

Die Berührungsflächen 13, 15, 16 der Anordnung 10 bilden ein Berührungsmuster auf der Unterseite des Anordnung 10, wobei das Berührungsmuster in den Ausführungsformen des Eingabeelements 10 keine Symmetrie oder höchstens eine C_{S}-Symmetrie aufweist, d.h. das zweidimensionale Berührungsmuster besitzt keine Drehsymmetrie. Ein Verhältnis von leitender Fläche zu nicht-leitender Fläche ist innerhalb der ringförmigen Berührungsfläche 13 kleiner als 0,8, insbesondere kleiner als 0,6, vorzugsweise kleiner als 0,3. Ein Außendurchmesser der ringförmigen Berührungsfläche 13 ist vorzugsweise größer als der Abstand benachbarter Leiterbahnen im berührungsempfindlichen Bildschirm 40. Der Außendurchmesser der ringförmigen Berührungsfläche 13 ist vorzugsweise mindestens 10 mm groß. Im gezeigten Ausführungsbeispiel beträgt der Außendurchmesser etwa 42 mm.

Im Ausführungsbeispiel der Fig. 1 haben die Berührungsflächen 15, 16 sowohl eine gleiche Form als auch eine gleiche Größe. In anderen Ausführungsformen, welche weiter unten diskutiert werden, können auch zwei unterschiedliche große und/oder zwei unterschiedlich geformte Berührungsflächen vorgesehen sein.

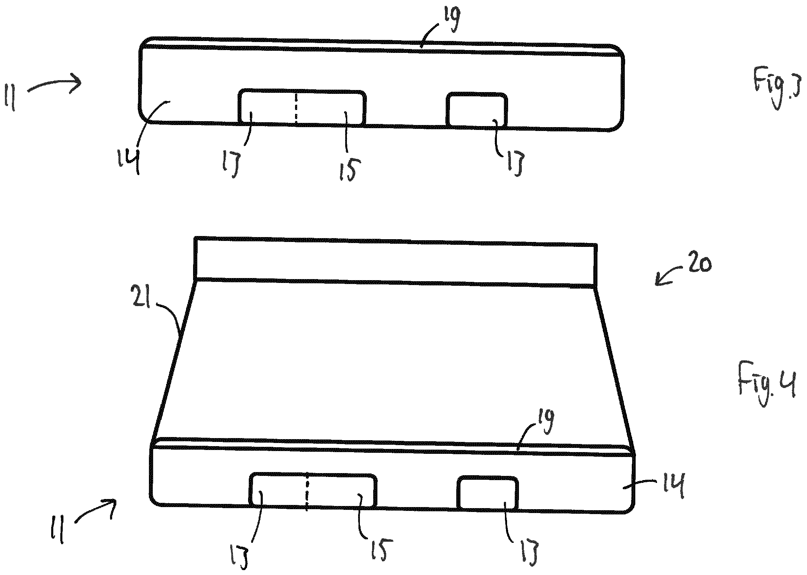

Die Fig. 2 zeigt eine Unteransicht einer weiteren Anordnung 11, welche die gleiche elektrisch leitfähige Struktur 12 wie die der Anordnung 10 der Fig. 1 aufweist. Im Gegensatz zu der Fig. 1 ist das isolierende Trägermaterial 14 hier kreisförmig. Die Anordnung 11 kann als eigenständiges Eingabeelement verwendet werden. Alternativ kann die Anordnung 11 mit einem Eingabeelement 20 verbunden werden. Eine Anordnung 11 zum Verbinden mit einem Eingabeelement 20 ist in den Figuren 3 und 4 gezeigt.

Die Fign. 3 und 4 zeigen jeweils einen Schnitt der Anordnung 11 sowie einen Schnitt der Anordnung 11, welche mit einem Eingabeelement 20 verbunden ist. Die Anordnung 11 weist hierzu ein optionales Befestigungsmittel 19 zum Befestigen der Anordnung 11 an einem Gehäuse 21 des Eingabeelements 20 auf. Beispielsweise ist die Anordnung 11 mittels des Befestigungsmittels 19 fest oder lösbar mit dem Eingabeelement 20 verbunden. Je nach Anwendung kommen für das Befestigungsmittel Haken, Ösen, Klebemittel, Klettverschluss, Saugnapf, usw. in Betracht. Das Befestigungsmittel 19 ist in der dargestellten Figur 3 als optisch transparente Klebeschicht 19 ausgestaltet. Das Befestigungsmittel ist z.B. auf einer der elektrisch leitfähigen Struktur 12 gegenüberliegenden Seite der Anordnung 11 angeordnet, kann aber auch auf der gleichen Seite wie die elektrisch leitfähige Struktur 12 angeordnet sein. Die Anordnung 11 ist an einer Unterseite des Gehäuses 21 befestigt. Das Eingabeelement 20 ist als ein Eingabeelement 20 für einen berührungsempfindlichen Bildschirm 40 ausgestaltet. Das Eingabeelement 20 umfasst ein Gehäuse 21, das im Wesentlichen aus einem nicht-leitenden Kunststoff, wie PU, oder Gummi besteht, umfasst. Ein geeignetes Material wäre zum Beispiel obomudolan®.

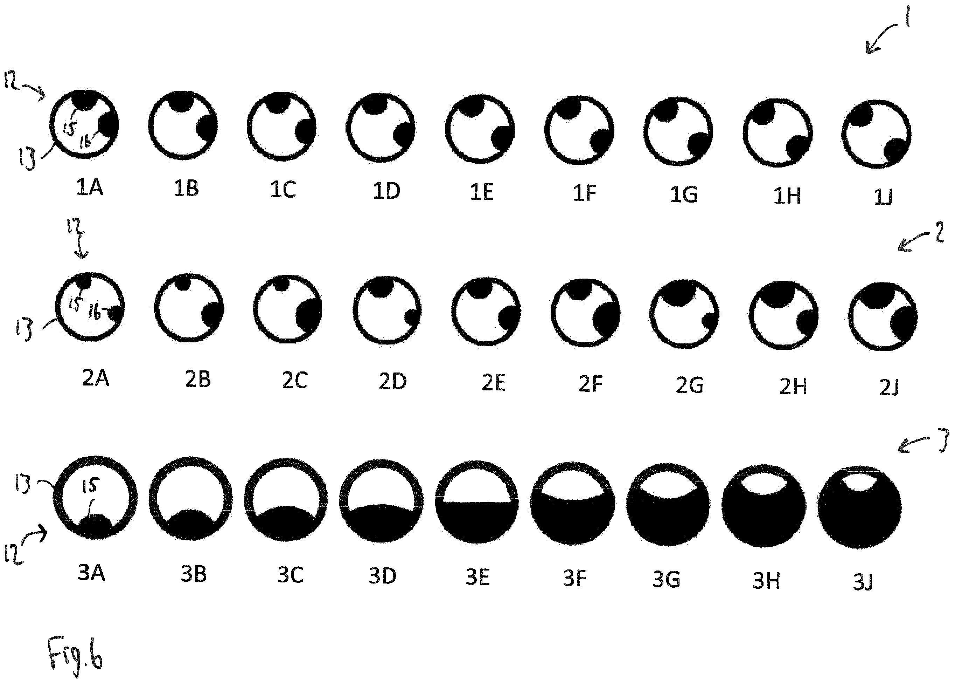

Die Figuren 6, 7 und 8 zeigen beispielhaft verschiedene elektrisch leitfähige Strukturen 1A-1J, 2A-2J, 3A-3J, 4A-4C, 5A-5C, welche z.B. in den Anordnungen 10 und 11 der Figuren 1 bis 4 verwendet werden können. Im Folgenden wird der Einfachheit halber auf die Struktur 12 Bezug genommen. Es ist hierbei klar, dass auch die anderen Strukturen 1A-1J, 2A-2J, 3A-3J, 4A-4C, 5A-5C gemeint sein können.

Die elektrisch leitfähige Struktur 12 ist derart ausgebildet, dass sie durch einen berührungsempfindlichen Bildschirm 40 erkannt werden kann. Die elektrisch leitfähige Struktur 12 ist insbesondere ausgebildet, beim Auflegen der Struktur 12 auf den berührungsempfindlichen Bildschirm 40 Kapazitätsänderungen zu verursachen, die durch kapazitive Sensoren des berührungsempfindlichen Bildschirms 40 detektierbar sind.

Figur 5 zeigt zwei perspektivische Ansichten eines Systems 100, wobei das System das in der Figur 4 beschriebene Eingabeelement 20 umfasst und weiterhin einen berührungsempfindlichen Bildschirm 40 sowie eine Steuer- und Verarbeitungseinheit 30 aufweist. Anstelle des Eingabeelements 20 kann auch lediglich die Anordnung 10, 11 vorgesehen sein. Die Anordnung 10, 11 kann auch zusätzlich zum Eingabeelement 20 vorgesehen sein. Nachstehend wird auf das Eingabeelement 20 Bezug genommen.

Das Eingabeelement 20 wird, wie durch einen Pfeil 25 angedeutet, auf den berührungsempfindlichen Bildschirm 40 abgelegt bzw. aufgelegt.

Der berührungsempfindliche Bildschirm 40 ist mittels eines Kabels 31 mit der Steuer- und Verarbeitungseinheit 30 verbunden, wobei das Kabel vorzugsweise als USB-Kabel ausgestaltet ist. Alternativ kann auch eine drahtlose Verbindung zwischen dem Bildschirm 40 und der Steuer- und Verarbeitungseinheit 30 vorgesehen sein. Der berührungsempfindliche Bildschirm 40 wird auch als Touchscreen bezeichnet und ist im gezeigten Ausführungsbeispiel ein kapazitiver Berührungsempfindlicher Bildschirm. Der berührungsempfindliche Bildschirm 40 kann z.B. auch als Tischplatte fungieren; in diesem Fall können ein oder mehrere Tischbeine an dem berührungsempfindlichen Bildschirm 40 montiert werden.

Weiter ist der berührungsempfindliche Bildschirm 40 ausgestaltet, eine Vielzahl von Berührungen gleichzeitig zu detektieren (Multitouch-Display). Die Berührung kann hierbei sowohl durch einen menschlichen Finger als auch durch die Berührungsflächen 13, 15, 16 des oben gezeigten Eingabeelements 20 erfolgen. Weiter können Berührungsflächen 13, 15, 16 einer Vielzahl von Eingabeelementen 20 gleichzeitig durch den berührungsempfindlichen Bildschirm 40 detektiert werden.

Der berührungsempfindliche Bildschirm 40 umfasst eine Sensormatrix, die eine Vielzahl von Zeilen und Spalten aufweist. Jede Spalte und jede Zeile umfasst einen vertikalen Draht (Leiterbahn) bzw. einen horizontalen Draht (Leierbahn) und an den Kreuzungspunkten der Drähte ist jeweils ein kapazitiver Sensor angeordnet.

Das elektrisch leitende Material der Struktur 12 reicht typischerweise über mehrere Drähte der Sensormatrix und verursacht in der Regel eine kapazitive Kopplung zu anderen, insbesondere horizontalen Drähten, die an Masse anliegen. Die Struktur 12 kann eine ähnliche Signalveränderung wie ein Finger eines Benutzers verursachen. Allerdings mit geringerem Signal-to-Noise-Verhältnis, typischer Weise von 1:3 bis 1:20, da zweimal das Sensorglas überwunden werden muss.

Beispielsweise kann der berührungsempfindliche Bildschirm 40 eine Bildschirmdiagonale von zwischen 5 und 100 Zoll aufweisen. In der Ausführung der Fig. 5 hat der berührungsempfindliche Bildschirm 40 eine Bildschirmdiagonale 55 Zoll, mit Abmessungen von 1220mm x 680 mm und verfügt über 172x105 Pixel.

Die Steuer- und Verarbeitungseinheit 30 ist zudem ausgestaltet zum Empfangen und Auswerten von durch die Berührungsflächen 13, 15, 16 des Eingabeelements 20 in dem berührungsempfindlichen Bildschirm 40 ausgelösten Signalen (Berührungssignalen).

Das Auflegen des Eingabeelements 20 auf den berührungsempfindlichen Bildschirm 40 wird aufgrund der leitenden Struktur 12 der Anordnung 10, 11 von kapazitiven Sensoren des berührungsempfindlichen Bildschirms 40 detektiert. Entsprechende Sensordaten, die mittels kapazitiver Sensoren des berührungsempfindlichen Bildschirms generiert werden, werden als analoges Signal an einen Touchcontroller weitergegeben, der baulich in eine Platte des als Tisch ausgebildeten berührungsempfindlichen Bildschirms 40 integriert sein kann, dort in einem zeitlichen Abstand von 0.1 ms digitalisiert und interpoliert und dann zusammen mit einem Zeitstempel über USB 2.0 oder 3.0 an die Steuer- und Verarbeitungseinheit 30 weitergeben, wo die Sensordaten empfangen, gespeichert und weiterverarbeitet werden. Der Touchcontroller kann dabei auch Teil der Steuer- und Verarbeitungseinheit 30 sein und die Steuer- und Verarbeitungseinheit 30 oder Teile davon können ebenfalls in die Platte des berührungsempfindlichen Bildschirms 40 oder in ein Gehäuse des berührungs-empfindlichen Bildschirms 40 integriert sein.

Nachdem das Eingabeelement 20 bzw. die Anordnung 10, 11 auf den berührungsempfindlichen Bildschirm 40 abgelegt wurde, erstellt die Steuer- und Verarbeitungseinheit 30 aus den Sensordaten ein Kapazitätsmuster für die leitende Struktur 12 des Eingabeelements und speichert dieses, wobei das Kapazitätsmuster eine ortsaufgelöste Darstellung mindestens zwei verschieden großer Kapazitätsänderungen oder mindestens drei paarweise verschieden großer Kapazitätswerte oder davon abgeleiteter Größen enthält.

Die Steuer- und Verarbeitungseinheit 30 ermittelt dabei Position und Orientierung des Eingabeelements 20 auf dem berührungsempfindlichen Bildschirm 40 aus den Sensordaten.

Die Steuer- und Verarbeitungseinheit 30 ist dazu eingerichtet, den berührungsempfindlichen Bildschirm 40 basierend auf den Sensordaten anzusteuern. Das heißt, wenn zum Beispiel das Eingabeelement 20 entlang dem in der Figur gezeigten Pfeil 25 bewegt wird, wird dies von der Steuer- und Verarbeitungseinheit registriert und es können daraufhin Aktionen ausgeführt werden. Zum Beispiel kann eine Anzeige des berührungsempfindlichen Bildschirms 40 abhängig von diesen Sensordaten verändert werden. Die Steuer- und Verarbeitungseinheit 30 kann beispielsweise einen Bereich des berührungsempfindlichen Bildschirms 40, der eine Umgebung eine aufgelegten Eingabeelements 20 darstellt, farbig markieren oder dort Schrift einblenden.

Basierend auf den Sensordaten können auch andere Aktionen initiiert werden. Wenn ein Benutzer zum Beispiel die Orienteirung oder die Position des Eingabeelements 20 auf dem Bildschirm 40 ändert, wird dies registriert und eine Aktion kann hiernach durchgeführt werden.

Zusammenfassend lässt sich sagen, dass als Eingabemöglichkeiten für die Steuer- und Verarbeitungseinheit zum Beispiel Eingaben auf dem berührungsempfindlichen Bildschirm selbst, zum Beispiel durch einen Finger, und zusätzlich Eingaben durch Bewegungen des Eingabeelements 20 oder der Eingabeelemente möglich sind. Auf der anderen Seite stehen die möglichen Aktionen, die die Steuer- und Verarbeitungseinheit 30 ausführen kann. Dazu zählt zum Beispiel Modifizieren der Anzeige des berührungsempfindlichen Bildschirms 40. Bei mehreren aufgelegten Eingabeelementen 20 sind auch mehrere Aktionen möglich.

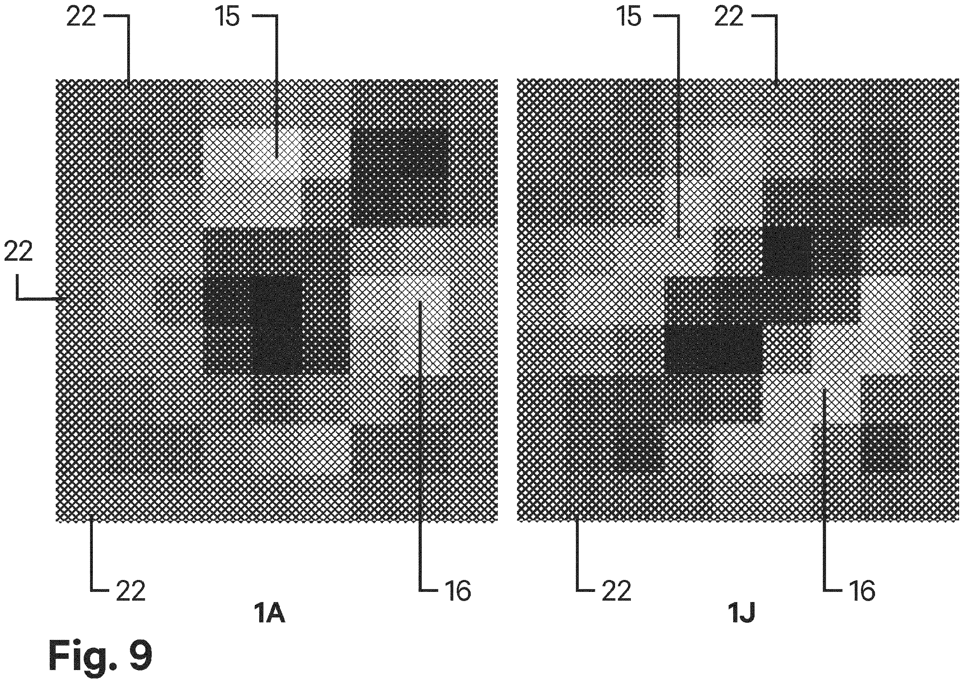

Die Figur 9 zeigt zwei Kapazitätsmuster, in denen Sensorsignale der kapazitiven Sensoren eines berührungsempfindlichen Bildschirms 40 ortsaufgelöst dargestellt werden, wobei die durch die Anordnungen 1A und 1J in der Sensormatrix des berührungsempfindlichen Bildschirms 40 ausgelösten Sensorsignale gezeigt sind. Der berührungsempfindlichen Bildschirms 40 umfasst ein kapazitives Gitter aus orthogonal zueinander angeordneten elektrischen Detektionsleiterbahnen. Die horizontalen Detektionsleiterbahnen befinden sich dabei in einer ersten Ebene und die vertikalen Detektionsleiterbahnen in einer zweiten, davon beabstandeten Ebene, so dass an den Kreuzungspunkten zwischen den horizontalen und den vertikalen Linien (die eine Projektion der Detektionsleiterbahnenebenen aufeinander darstellen) eine Kapazität gemessen werden kann. Wird ein Finger oder eine leitende Struktur 12 einer aufgelegten Anordnung 10, 11 in die Nähe des Gitters gebracht, so verändert sich die Kapazität an Kreuzungspunkten, die in dem Bereich liegen, in dem die Kontaktierung bzw. Annäherung stattfindet. Die Kreuzungspunkte stellen also die Pixel dar, an denen ortsaufgelöst Kapazitätsänderungen detektiert werden können. Dort, wo die Anordnung 10, 11 abgelegt wurde, wird an einigen Kreuzungspunkten eine Kapazitätsveränderung registriert, die in den Bildern durch eine Schraffur eines quadratischen Bereichs um den jeweiligen Kreuzungspunkt kenntlich gemacht wird, wenn sie einen bestimmten Schwellwert übersteigt. So kann ein Ort, an dem die Anordnung 10, 11 auf den Bildschirm 40 gelegt wurde, detektiert werden.

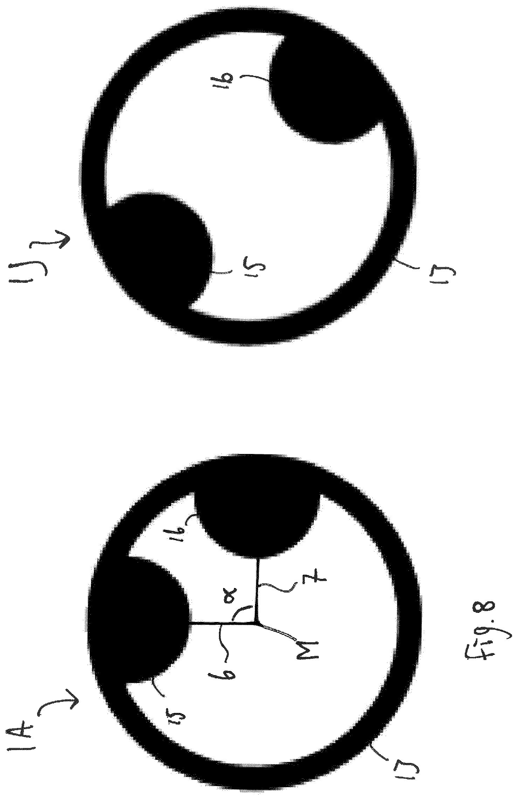

In der Fig. 9 sind durch den berührungsempfindlichen Bildschirm 40 aufgenommene Kapazitätsmuster der Anordnungen 1A und 1J der Fig. 8 gezeigt. Zur Deutlichkeit, sind zwei quadratische Ausschnitte des berührungsempfindlichen Bildschirms 40 gezeigt. Länge und Breite der quadratischen Abschnitte entsprechen dem Durchmesser der ringförmigen Berührungsflächen 13 der Anordnungen 1A und 1J plus einer Zeile und einer Spalte. Die Struktur der ringförmigen Berührungsfläche 13 ist aus diesen Bildern bereits gut erkennbar. In der Fig. 9 entsprechen die Schraffuren am äußersten Rand 22 den ohne Störung auf dem Bildschirm 40 zwischen den Drähten der Sensormatrix gemessenen Werten. Der äußere Rand hat eine Breite und Länge von jeweils einem Pixel. Dünnere Schraffuren werden durch leitendes Material, d. h. die Struktur 12, an Stellen verursacht, an denen Retransmission gering ist. Wie oben angedeutet, sind die durch Retransmission ausgelösten Signale negativ und werden in der Fig. 9 durch Schraffuren angedeutet, welche dicker sind als die Schraffuren am Rand 22. Dickere Schraffuren werden somit an Stellen ohne leitendes Material und mit Retransmission verursacht. Weiter ist in der Fig. 9 die Lage der Berührungsflächen 15, 16 mit Bezugszeichen angedeutet. Zu erkennen ist insbesondere, dass die Berührungsflächen 15, 16 der Anordnung 1A, 1J positive Signale, d.h. Schraffuren mit dünneren Dicken als die Schraffuren am Rand 22, in den Sensoren des berührungsempfindlichen Bildschirms 40 auslösen. Außerdem ist gut erkennbar, dass die Berührungsflächen 15, 16 der Anordnung 1A in einem Mittelpunktswinkel α von etwa 90° zueinander angeordnet sind. Hierdurch sind die durch Retransmission ausgelösten charakteristischen negativen Signale zwischen diesen Berührungsflächen 15, 16 (oben rechts) und in der Mitte der ringförmigen Berührungsfläche 13 am größten. Die Berührungsflächen 15, 16 der Anordnung 1J sind ungefähr gegenüberliegend angeordnet und bilden einen Mittelpunktswinkel α von etwa 170°. Hierdurch sind die durch Retransmission ausgelösten negativen Signale um die Mitte der ringförmigen Berührungsfläche 13 am größten. Die Anordnungen 1A und 1J nutzen somit den Effekt der Retransmission für eine Zuordnung der Anordnungen 1A, 1J aus.

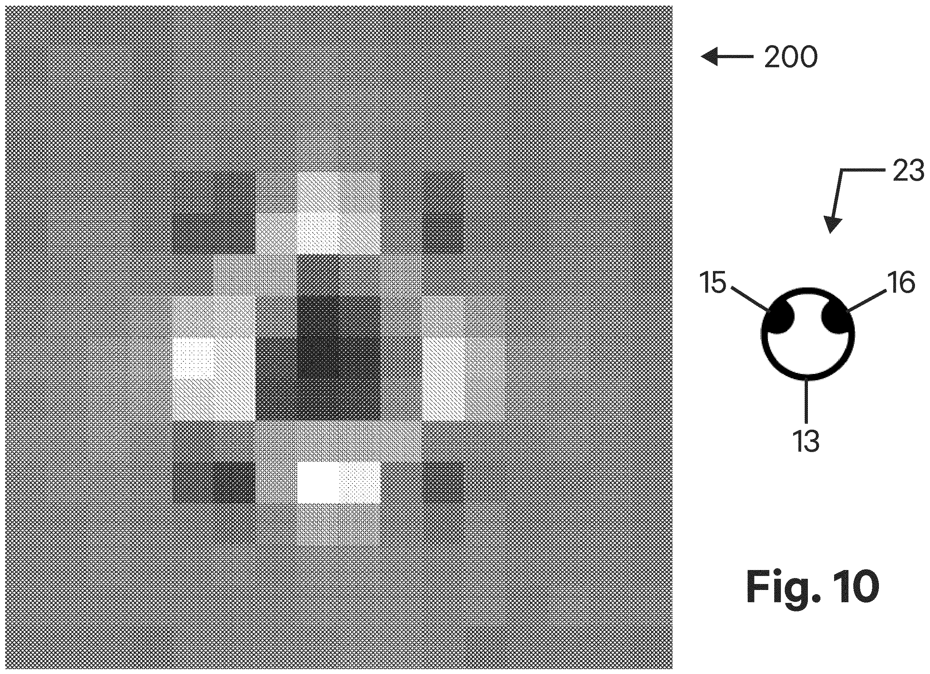

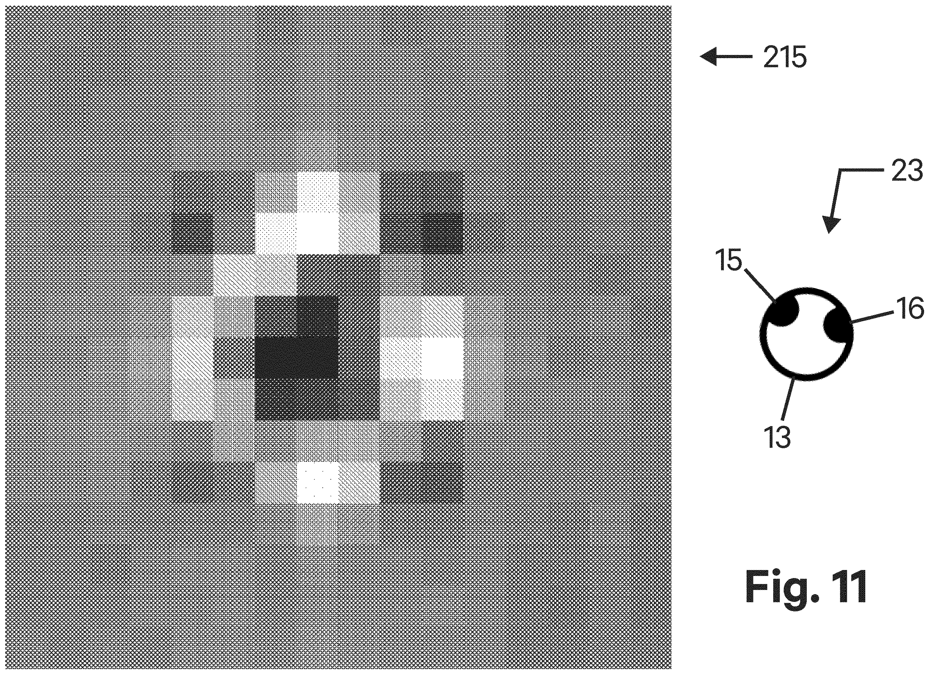

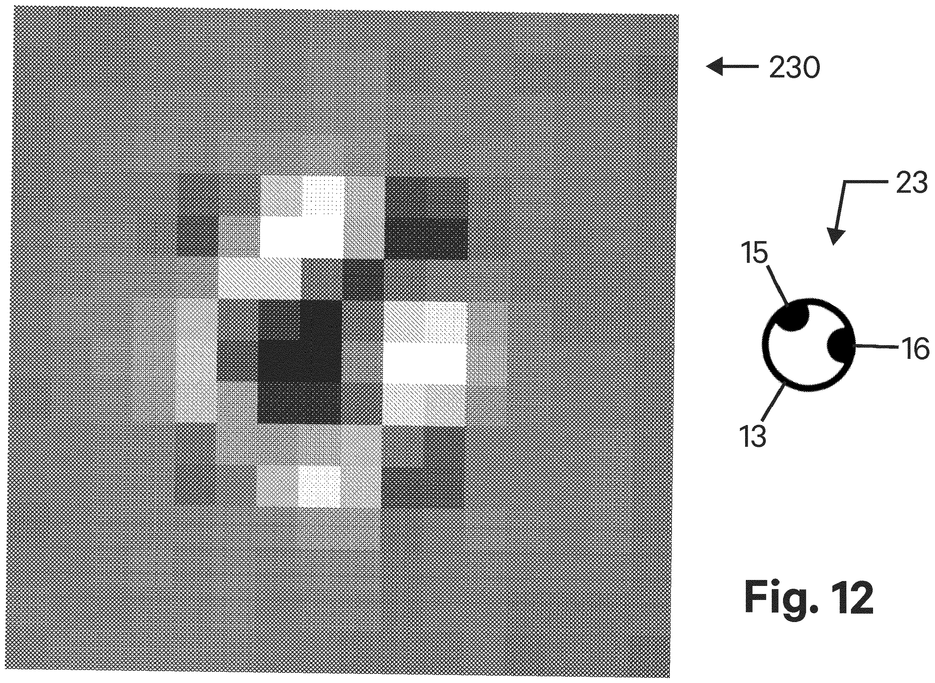

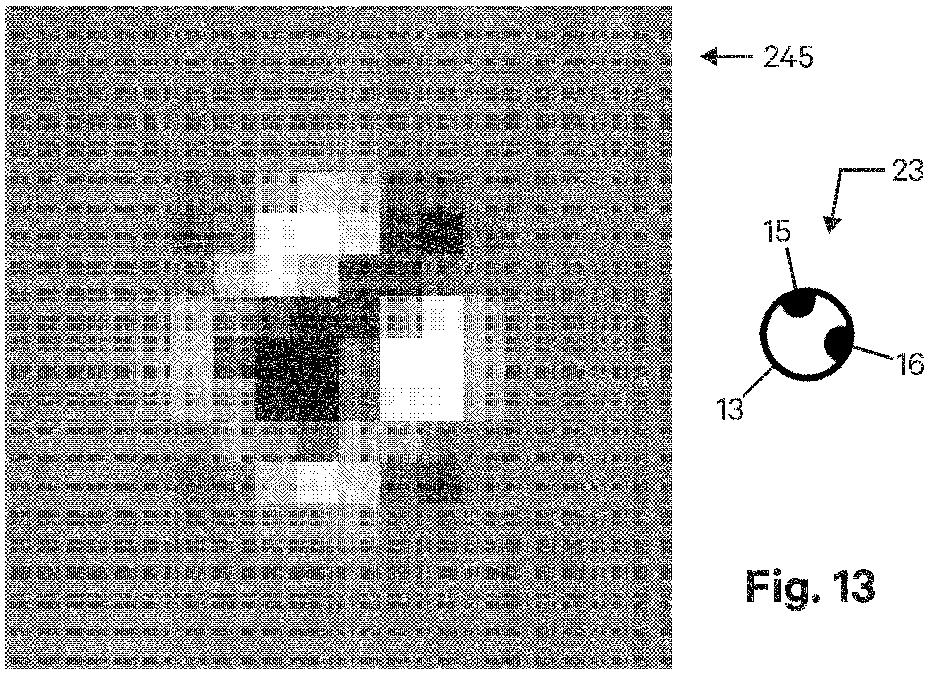

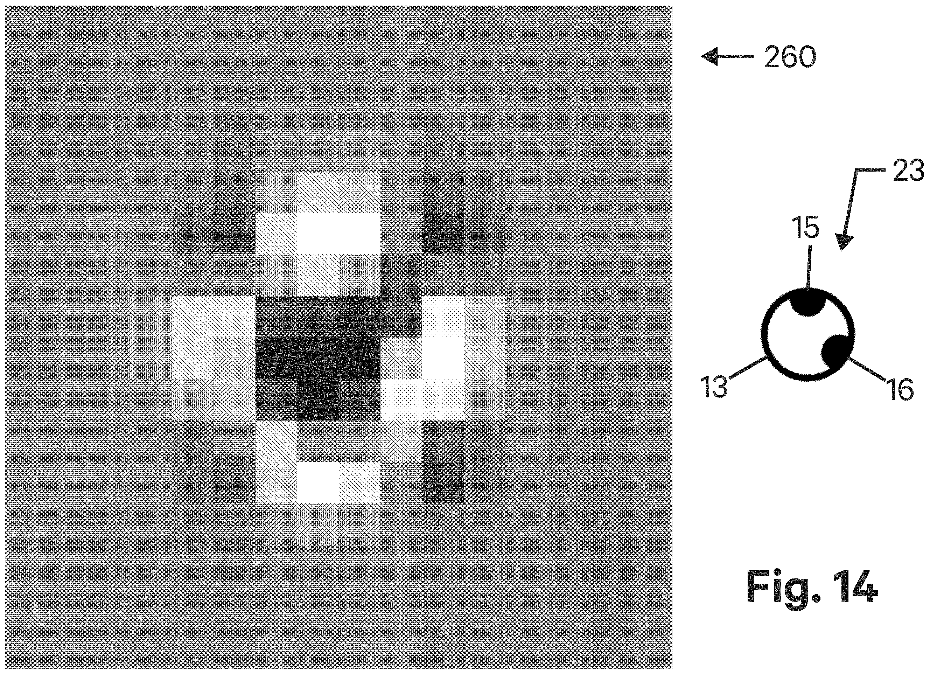

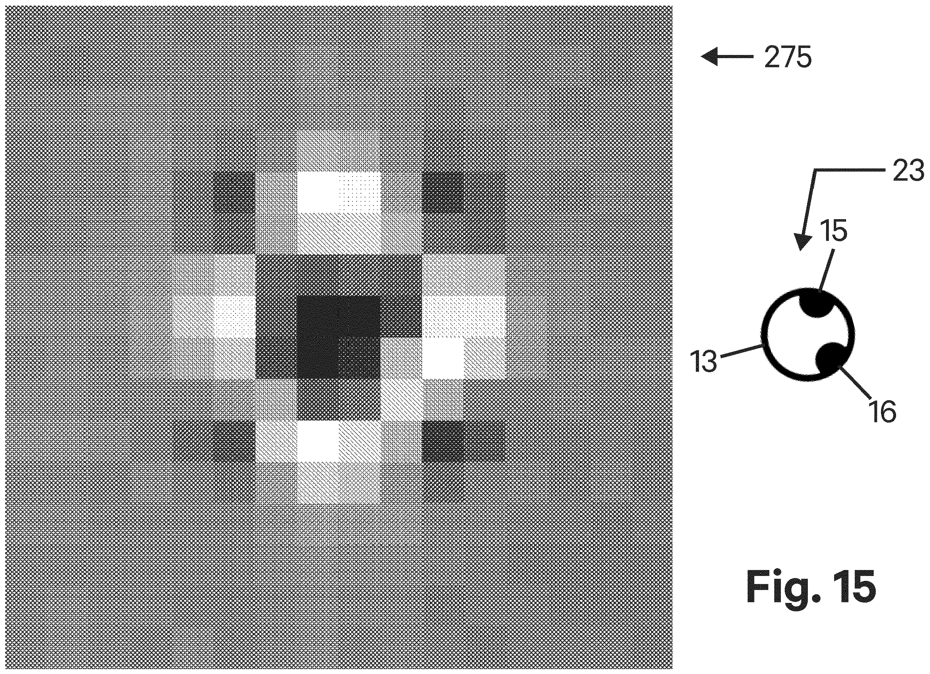

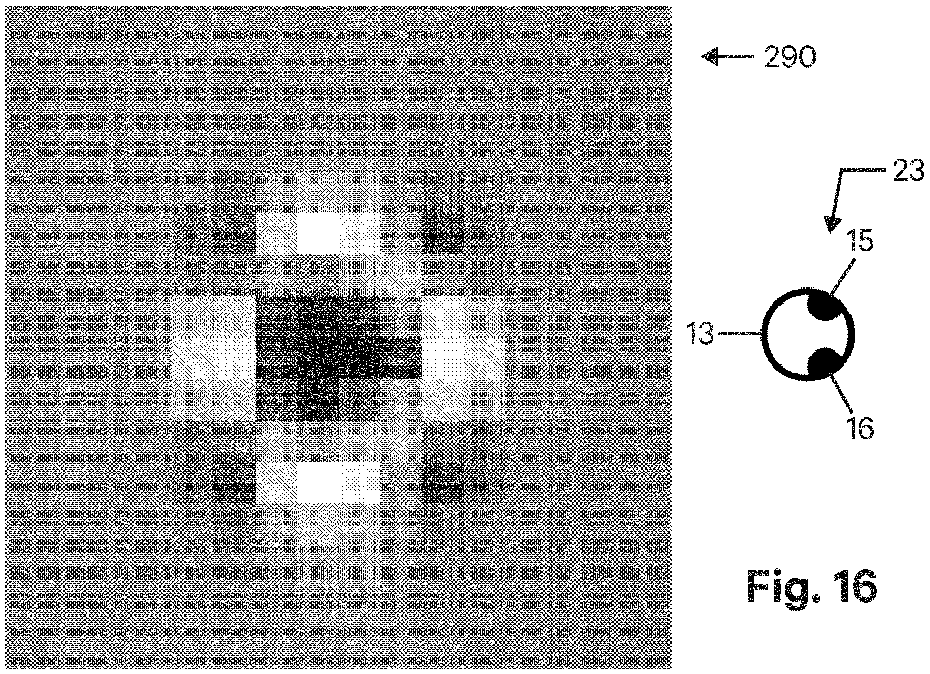

In den Figuren 10-16 sind durch den berührungsempfindlichen Bildschirm 40 aufgenommene Kapazitätsmuster 200, 215, 230, 245, 260, 275, 290 einer einzigen Anordnung 23 bei unterschiedlichen Orientierungen der Anordnung 23 auf dem Bildschirm 40 gezeigt. Hierbei hat die Anordnung 23 einen Abstand von 4 Pixeln zum Rand des Ausschnitts. Der Rand misst somit kein Signal, d.h. eine Kapazitätsänderung von 0 F. Die Anordnung 23 wird durch etwa 64 Kreuzungspunkte des Bildschirms aufgelöst (Quadrat mit einer Länge von 8 Pixeln und einer Breite von 8 Pixeln). Der Aufbau und die Orientierung der Anordnung 23, insbesondere der elektrisch leitfähigen Struktur 12 der Anordnung 23, ist hierbei rechts in verkleinerter Form dargestellt. Ähnlich wie in der Fig. 9 ist die Schraffur des Kapazitätsmusters dicker bei negativen Signalen (entsprechend der Retransmission). Die Schraffur des Kapazitätsmusters ist dünner bei positiven Signalen. Positive Signale werden insbesondere in der Nähe der Berührungsflächen 13, 15, 16 gemessen. Negative Signale werden insbesondere in der Mitte der ringförmigen Struktur 13 und in den Eckpunkten des Quadrats außerhalb der ringförmigen Struktur 13 gemessen. Die relative Orientierung der Anordnung 23 auf dem Bildschirm 40 ist in den Figuren 10-16 jeweils 0°, 15°, 30°, 45°, 60°, 75° bzw. 90°. Zu erkennen ist, dass sich die Kapazitätsmuster 200, 215, 230, 245, 260, 275, 290 hinreichend voneinander unterscheiden, um eine Aussage darüber zu treffen, wie die Orientierung der Anordnung 23 auf dem Bildschirm 40 ist. Durch die gewählte Markierung der Anordnung 23 in Form von zwei Berührungsflächen 15, 16 ist die Rotationssymmetrie der ringförmigen Berührungsfläche 13 gebrochen und daher ist eine Bestimmung der Orientierung der Anordnung 23 auf dem berührungsempfindlichen Bildschirm 40 möglich. Mit anderen Worten ruft jede Orientierung der Anordnung 23 ein charakteristisches Kapazitätsmuster 200, 215, 230, 245, 260, 275, 290 mit positiven und negativen Signalen im Bildschirm 40 hervor, das von den anderen Kapazitätsmustern unterscheidbar ist.

Es sei erwähnt, dass eine Detektion auch erfolgen kann, wenn das Eingabeelement 20 und/oder die Anordnung 10, 11 nicht durch einen Benutzer berührt werden. Da bis auf eine horizontale und eine vertikale Detektionsleiterbahn des genannten Gitters z.B. benachbarte Detektionsleiterbahnen auf Masse liegen, ist eine Ableitung auch möglich, wenn sich ein Bereich der leitenden Struktur 12 auf einer Detektionsleiterbahn befindet, die auf Masse liegt. Da sich leitende Strukturen 12 bei typischen Anordnungen 10, 11 über einen Bereich der Anordnung 10, 11 erstrecken, der mehrere Leiterbahnen auf dem berührungsempfindlichen Bildschirm 40 umfasst, ist es für eine zuverlässige Detektion durch den berührungsempfindlichen Bildschirm 40 nicht mehr notwendig, dass das Eingabeelement 20 oder die Anordnungen 10, 11 durch einen Benutzer angefasst werden.

Außer einem Ort einer solchen Kapazitätsänderung kann auch ihre Größe detektierbar sein, um ein Kapazitätsmuster für die leitende Struktur 12 der Anordnung 10, 11 erstellen zu können, welches eine ortsaufgelöste Darstellung mindestens zwei verschieden großer Kapazitätsänderungen oder mindestens drei paarweise verschieden großer Kapazitätswerte oder davon abgeleiteter Größen enthält. Derartige Kapazitätsmuster sind für die Anordnungen 1A und 1J in der Fig. 9 gezeigt.

Dies geschieht beispielsweise, indem zur Detektion der Kapazitätsänderungen unterschiedliche Schwellenwerte verwendet werden, so dass ein Signal zum Beispiel bei 10 %, 20 %, 30 %, ... 100 % eines maximalen Wertes ausgelöst wird bzw. entsprechende negative Signale (dicke Schraffuren in der Fig. 9) durch die Retransmission. Es können mindestens zwei solcher Schwellenwerte verwendet werden.

Beispielsweise können Bilder bei einem Schwellenwert von 1 pF und 2,5 pF aufgenommen werden. Das entspricht 10 % bzw. 25 % einer typischen durch einen Finger verursachten Kapazitätsänderung von 10 pF, die hier als Maximalwert verwendet wird.

Das heißt, für ein erstes Signal, das bereits bei 10 % des maximalen Wertes ausgelöst wird, ist nur eine sehr geringe Kapazitätsänderung nötig. Diese wird an vielen Stellen, an denen die Anordnung 1A, 1J den Bildschirm 40 kontaktiert, hervorgerufen (s. Figur 9). Demnach gibt das Bild aus Figur 9 den Umriss der gesamten Anordnungen 1A und 1J wieder. Es kann somit zur Positionsbestimmung der Anordnung 1A, 1J auf dem Bildschirm 40 herangezogen werden, aber gibt keinen Aufschluss über die inneren Feinheiten der Struktur 12. Es ist beispielsweise nicht ersichtlich, wo oben und unten ist und wie die Orientierung der Anordnung 1A, 1J auf dem Bildschirm 40 ist.

Das zweite Signal hingegen, wird erst ausgelöst, wenn Kapazitätsveränderungen von mindestens 2,5 pF vorliegen. Dadurch ergibt sich ein differenzierteres Bild. Die leitende Struktur 12 löst bei diesem Schwellenwert ein Signal aus, indem die Markierungen 15, 16 deutlich sichtbar sind. Durch die Markierung 15, 16 ist eine Symmetrie gebrochen und es kann neben der Position auch die Orientierung der Anordnung 1A, 1J analysiert werden. Es kann beispielsweise durch einen Abgleich mit Daten aus dem Speicher der Steuer- und Verarbeitungseinheit 30 festgestellt werden, dass oben und unten bei der vorliegenden Anordnung unterschiedlich sind, und sich nach einer Drehung um 180° nicht das gleiche Bild ergibt. Die relative Lage der Signalstärken auf dem Umfang der ringförmigen Berührungsfläche 13 und im Inneren der ringförmigen Berührungsfläche 13 zueinander ist entscheidend für die Symmetriebrechung. Neben der Symmetriebrechung erlauben die Unterschiede in der inneren Struktur, d.h. die Markierungen 15, 16, auch die Unterscheidung der verschiedenen Anordnungen 1A, 1J.

Die Steuer- und Verarbeitungseinheit 30 kann das Kapazitätsmuster wie erwähnt mit vorbekannten Kapazitätsmustern vergleichen, um beispielsweise ein Eingabeelement 20, eine Anordnung 1A, 1J oder Bautyp zu identifizieren. Die Erkennung kann beispielsweise mit Methoden des maschinellen Lernens antrainiert sein. Dabei ist zu beachten, dass eine Identifikation typischerweise nicht nur auf Absolutwerten der Kapazitätsänderungen basieren kann, da der Absolutwert davon abhängt, ob die Anordnung 1A, 1J oder das Eingabeelement 20 berührt werden, wo sie auf dem Bildschirm liegen und wie sie orientiert sind.

Ist das Kapazitätsmuster erfasst, kann die Steuer- und Verarbeitungseinheit 30 seine Bewegungen, also bspw. Rotationen und/oder Translationen auf dem Bildschirm 40 anhand der Sensordaten verfolgen.

Bei Verwendung mehrerer Eingabeelemente 20 und/oder mehrerer Anordnungen 10, 11 kann es vorteilhaft sein, auch Gruppen von Anordnungen 10, 11 zu bilden. Jede Anordnung 10, 11 der Gruppe weist eine unterschiedlich ausgestaltete elektrisch leitfähige Struktur 12 auf. Zum Beispiel sind in der Fig. 6 Strukturen 1A, 1B, 1C, 1D, 1E, 1F, 1G, 1H, 1J gezeigt, welche dort als Gruppe 1 bezeichnet sind. Die Strukturen 1A-1J der Gruppe 1 unterscheiden sich in der Anordnung der ersten Berührungsfläche 15 und der zweiten Berührungsfläche 16 relativ zu einander. Die Berührungsflächen 15, 16 sind gleich groß und gleich geformt, befinden sich aber an unterschiedlichen Stellen innerhalb der ringförmigen Berührungsfläche 13. Insbesondere sind die elektrisch leitfähigen Strukturen 15, 16 der Anordnungen 1A, 1B, 1C, 1D, 1E, 1F, 1G, 1H, 1J derart voneinander beabstandet, dass ein Umfangsabstand zwischen der ersten Berührungsfläche 15 und der zweiten Berührungsfläche 16 auf der ringförmigen Berührungsfläche 13 mindestens so groß ist, wie der Abstand benachbarter Sensordrähte in der Sensormatrix.

Die elektrisch leitfähigen Strukturen 1A und 1J der Fig. 6 sind zum Vergleich nochmals vergrößert in der Fig. 8 dargestellt. Hierbei verläuft in der Struktur 1A eine erste gedachte Gerade 6 durch den Mittelpunkt M der ringförmigen Berührungsfläche 13 und den Schwerpunkt der ersten Berührungsfläche 15. Außerdem verläuft eine zweite gedachte Gerade 7 durch den Mittelpunkt M der ringförmigen Berührungsfläche 13 und den Schwerpunkt der zweiten Berührungsfläche 16. Die erste Gerade 6 und die zweite Gerade 7 schließen einen Winkel α von kleiner als 180° und größer als 0° ein, wobei der Winkel α in der Struktur 1A etwa 90° beträgt. Der Winkel α kann als Mittelpunktswinkel aufgefasst werden. Der Winkel α beträgt für die in der Fig. 6 gezeigten Strukturen 1A, 1B, 1C, 1D, 1E, 1F, 1G, 1H, 1J: 90°, 100°, 110°, 120°, 130°, 140°, 150°, 160° bzw. 170°. Insgesamt umfasst die Gruppe 1 somit neun verschiedene elektrisch leitfähige Strukturen. Beispielsweise beträgt der Mittelpunktswinkel α bei einem Durchmesser der ringförmigen Berührungsfläche von 42 mm und einem Umfangsabstand von 7 mm zwischen der ersten Berührungsfläche 15 und der zweiten Berührungsfläche 16 etwa 20° oder ein Vielfaches von 20° (z.B. 40°, 60°, 80°, 100°, 120°, 140° oder 160°).

Weiter sind in der Fig. 6 Strukturen 2A, 2B, 2C, 2D, 2E, 2F, 2G, 2H, 2J gezeigt, welche dort als Gruppe 2 bezeichnet sind. Die Strukturen 2A-2J der Gruppe 2 unterscheiden sich hinsichtlich der Größe der Berührungsflächen 15, 16. Hierbei gibt es in der Gruppe 2 drei verschieden große erste Berührungsflächen 15 und drei verschieden große Berührungsflächen 16. Durch Kombination der verschiedenen Größen gibt es insgesamt neun unterschiedliche Strukturen 2A, 2B, 2C, 2D, 2E, 2F, 2G, 2H, 2J. Ansonsten befinden sich die Schwerpunkte der Berührungsflächen 15, 16 an gleichen Stellen innerhalb der ringförmigen Berührungsfläche 13, mit anderen Worten ist der Winkel α für alle Strukturen 2A-2J gleich.

Außerdem sind in der Fig. 6 neun verschiedene Strukturen 3A, 3B, 3C, 3D, 3E, 3F, 3G, 3H, 3J gezeigt, die eine Gruppe 3 bilden. Die Strukturen der Gruppe 3 unterscheiden sich hinsichtlich ihrer Größe und ihrer Form. Die Strukturen der Gruppe 3 weisen innerhalb der ringförmigen Berührungsfläche 13 eine einzige Berührungsfläche 15 auf.

Es können Paare 3A - 3J, 3B - 3H, 3C - 3G, 3D - 3F von Strukturen gebildet werden, wobei die Berührungsflächen 15 dieser Paare komplementär geformt sind und zusammen einen Kreis bilden, welcher die ringförmige Berührungsfläche 13 komplett ausfüllt. Die Umrandungen der Berührungsflächen 15 der Strukturen 3A, 3B, 3C, 3D, 3F, 3G, 3H, 3J sind jeweils durch zwei Kreisbögen begrenzt, wobei einer der Kreisbögen durch einen inneren Kreisbogen der ringförmigen Berührungsfläche 13 bestimmt ist. Die Umrandung der Berührungsfläche 15 der Struktur 3E ist durch eine Linie und einen Kreisbogen begrenzt. Die Berührungsfläche 15 der Struktur 3E bildet einen Halbkreis und kann mit einer weiteren Struktur 3E einen Kreis bilden, welcher die ringförmige Berührungsfläche 13 komplett ausfüllt.

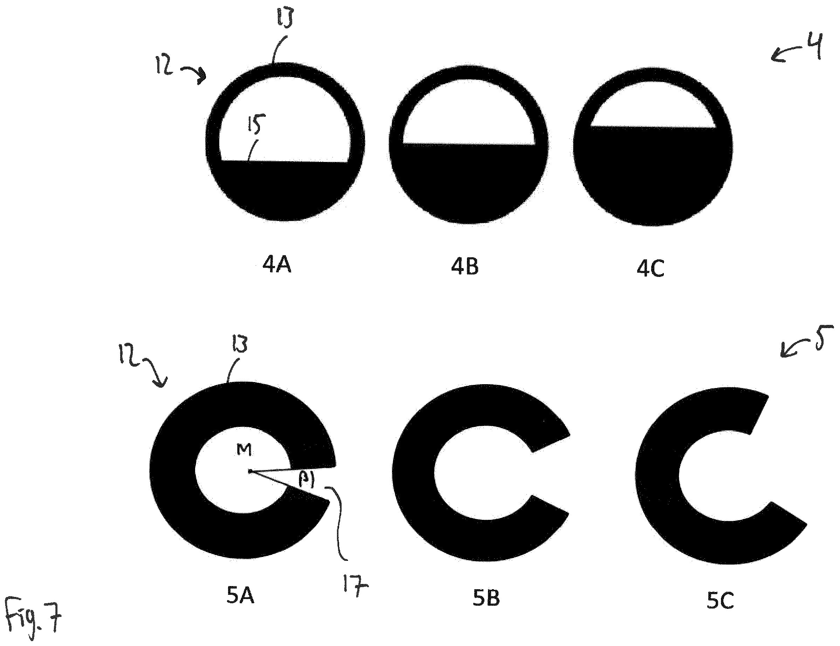

Außerdem sind in der Fig. 7 drei verschiedene Strukturen 4A, 4B, 4C, gezeigt, die eine Gruppe 4 bilden. Die Strukturen der Gruppe 4 unterscheiden sich hinsichtlich ihrer Größe und ihrer Form. Die Strukturen der Gruppe 4 weisen innerhalb der ringförmigen Berührungsfläche 13 eine einzige Berührungsfläche 15 auf. In ähnlicher Weise wie in der Gruppe 3 sind in der Gruppe 4 die Strukturen 4A und 4C komplementär geformt und bilden zusammen einen Kreis, welcher die die ringförmige Berührungsfläche 13 komplett ausfüllt. Die Berührungsfläche 15 der Struktur 4B bildet einen Halbkreis und kann mit einer weiteren Struktur 4B einen Kreis bilden, welcher die ringförmige Berührungsfläche 13 komplett ausfüllt. Die Umrandungen der Berührungsflächen 15 der Strukturen 4A, 4B, 4C sind durch eine Linie und einen Kreisbogen definiert.

Für alle Gruppen 1, 2, 3, 4 gilt, dass jede elektrische Struktur 12 jeder Gruppe eine gleiche ringförmige Berührungsfläche 13 aufweist. Die Strukturen innerhalb jeder Gruppe 1, 2, 3, 4 unterscheiden sich jedoch hinsichtlich ihrer Markierung 15, 16. Jede elektrisch leitfähige Struktur 12 weist allenfalls eine Spiegelsymmetrieebene auf, jedoch keine Drehsymmetrie.

Weiter ist in der Fig. 7 eine Gruppe 5 mit drei verschiedenen Strukturen 5A, 5B, 5C gezeigt. Die Strukturen der Gruppe 5 unterscheiden sich von den Strukturen der Gruppen 1, 2, 3, 4 derart, dass die Markierung 17 der Strukturen 5 eine Öffnung 17 der ringförmigen Berührungsfläche ist. Die Öffnung 17 hat zum Beispiel einen Öffnungswinkel β von mindestens 10° und/oder höchstens 45°.

Ein Verfahren zur Verwendung der berührungsempfindlichen Sensormatrix 40 im Sinne dieser Anmeldung, bzw. eines wie oben beschriebenen Systems 100, umfasst zumindest die folgenden Schritte:
- Detektieren von Kapazitätsänderungen durch kapazitive Sensoren einer berührungsempfindlichen Sensormatrix 40, wobei die Kapazitätsänderungen durch eine elektrisch leitfähige Struktur 12 einer die Sensormatrix kontaktierenden Anordnung 10 verursacht werden.
- Erstellen eines Kapazitätsmusters für die leitende Struktur 12 der Anordnung 10.
- Vergleichen des aufgenommenen Kapazitätsmusters mit vorbekannten Kapazitätsmustern.
- Erkennen der Anordnung 10 auf der berührungsempfindlichen Sensormatrix 40.

Weitere Schritte des Verfahrens umfassen beispielsweise:
- Erkennen, anhand der ringförmigen Berührungsfläche 13 der Anordnung, einer Position der Anordnung 10 auf der Sensormatrix bzw. dem berührungsempfindlichen Bildschirm 40 und/oder
- Erkennen, anhand der Markierung 15, 16 der Anordnung 10, einer Orientierung der Anordnung 10 auf der Sensormatrix bzw. dem berührungsempfindlichen Bildschirm 40.

Weitere Schritte ergeben sich durch die obige Beschreibung.

Die oben beschriebene Anordnung 10, 11 kann zum Beispiel mittels des nachstehenden Verfahrens hergestellt werden.

Das Verfahren zum Herstellen der Anordnung 10, 11 umfasst die Schritte:
- Bereitstellen eines elektrisch isolierenden Trägermaterials 14,
- Aufbringen eines elektrisch leitfähigen Materials auf das Trägermaterial 14 oder in das Trägermaterial 14,
- Bilden der elektrisch leitfähigen Struktur 12,
- Bilden der Anordnung 10, 11.

In einer vorteilhaften Ausführungsform ist das elektrisch leitfähige Material eine elektrisch leitfähige Farbe oder ein elektrisch leitfähiger Lack. In diesem Fall kann das elektrisch leitfähige Material z.B. mittels Siebdruck auf das Trägermaterial 14 aufgebracht werden. Für das Trägermaterial 14 kommen dann Materialien in Frage, die in einem Siebdruckverfahren verwendet werden können. Bei Verwendung eines elektrisch leitfähigen Anstrichmittels, wie Farbe oder Lack, kann dieses durch Rollen, Streichen und/oder Sprühen auf das Trägermaterial 14 aufgebracht werden.

Alternativ kann das elektrisch leitfähige Material als Schicht oder als vorgefertigte Schicht auf das Trägermaterial aufgebracht werden und dieses beispielsweise teilweise oder vollständig bedecken. Die elektrisch leitfähige Struktur 12 kann durch Abtragen eines Teils der elektrisch leitenden Schicht, insbesondere durch Abkratzen oder Weglasern, gebildet werden. Die elektrisch leitfähige Schicht kann aus einem ITO (s. oben) gebildet sein.

### Bezugszeichenliste

- 1: elektrisch leitfähige Strukturen
- 1A-1J: elektrisch leitfähige Strukturen
- 2: elektrisch leitfähige Strukturen
- 2A-2J: elektrisch leitfähige Strukturen
- 3: elektrisch leitfähige Strukturen
- 3A-3J: elektrisch leitfähige Strukturen
- 4: elektrisch leitfähige Strukturen
- 4A-4C: elektrisch leitfähige Strukturen
- 5: elektrisch leitfähige Strukturen
- 5A-5C: elektrisch leitfähige Strukturen
- 6: erste Gerade
- 7: zweite Gerade
- 10: Anordnung
- 11: Anordnung
- 12: elektrisch leitfähige Struktur
- 13: ringförmige Berührungsfläche
- 14: Trägermaterial
- 15: Berührungsfläche
- 16: Berührungsfläche
- 17: Öffnung
- 18: Ausnehmung
- 19: Klebeschicht
- 20: Eingabeelement
- 21: Gehäuse
- 22: Schraffur am äußersten Rand
- 23: Anordnung
- 25: Bewegungsrichtung
- 30: Steuer- und Verarbeitungseinheit
- 31: Verbindung
- 40: berührungsempfindlicher Bildschirm
- 100: System
- 200: Kapazitätsmuster der Anordnung 23 bei 0°
- 215: Kapazitätsmuster der Anordnung 23 bei 15°
- 230: Kapazitätsmuster der Anordnung 23 bei 30°
- 245: Kapazitätsmuster der Anordnung 23 bei 45°
- 260: Kapazitätsmuster der Anordnung 23 bei 60°
- 275: Kapazitätsmuster der Anordnung 23 bei 75°
- 290: Kapazitätsmuster der Anordnung 23 bei 90°
- α: Mittelpunktswinkel

## Patentansprüche

1. Anordnung (10, 11) zum Detektieren durch eine berührungsempfindliche Sensormatrix (40), umfassend
- eine elektrisch leitfähige Struktur (12), wobei die Struktur (12) eine ringförmige Berührungsfläche (13) und eine Markierung (15, 16, 17) aufweist, und
- ein elektrisch isolierendes Trägermaterial (14), auf dem die Struktur (12) aufgebracht ist oder in das die Struktur (12) eingebettet ist.

2. Anordnung (10, 11) nach Anspruch 1, **dadurch gekennzeichnet, dass** die Markierung (15, 16, 17) mindestens eine Berührungsfläche (15, 16) umfasst oder ist, welche elektrisch leitend mit der ringförmigen Berührungsfläche (13) verbunden ist.

3. Anordnung (10, 11) nach Anspruch 2, wobei die mindestens eine Berührungsfläche (15, 16) innerhalb der ringförmigen Berührungsfläche (13) angeordnet ist.

4. Anordnung (10, 11) nach einem der Ansprüche 2-3, wobei die Markierung (15, 16, 17) mindestens zwei unterschiedlich große Berührungsflächen (15, 16) und/oder zwei unterschiedlich geformte Berührungsflächen (15, 16) umfasst.

5. Anordnung (10, 11) nach einem der Ansprüche 2-4, umfassend eine erste Berührungsfläche (15) und eine zweite Berührungsfläche (16) wobei ein Umfangsabstand zwischen der ersten Berührungsfläche (15) und der zweiten Berührungsfläche (16) auf der ringförmigen Berührungsfläche (13) größer als 5 mm ist.

6. Anordnung (10, 11) nach einem der vorstehenden Ansprüche, wobei die elektrisch leitfähige Struktur (12) mittels Siebdruck auf dem Trägermaterial (14) aufgedruckt ist.

7. Anordnung (10, 11) nach einem der vorstehenden Ansprüche, wobei ein äußerer Durchmesser der ringförmigen Berührungsfläche (13) mindestens 10 mm ist.

8. Anordnung (10, 11) nach einem der vorstehenden Ansprüche, wobei die Markierung (15, 16, 17) zum Brechen der Rotationssymmetrie der ringförmigen Berührungsfläche (13) ausgestaltet ist.

9. Anordnung (10, 11) nach einem der vorstehenden Ansprüche, wobei die Markierung eine Öffnung (17) der ringförmigen Berührungsfläche (13) umfasst oder ist, wobei die Öffnung (17) vorzugsweise einen Öffnungswinkel (β) von mindestens 30° und/oder höchstens 150° hat.

10. Anordnung (10, 11) nach einem der vorstehenden Ansprüche, umfassend ein Befestigungsmittel (19), welches dazu ausgestaltet ist, die Anordnung (10, 11) an einem weiteren von der Anordnung (10, 11) verschiedenen Element (20) zu befestigen.

11. Gruppe von Anordnungen (10, 11) gemäß den vorstehenden Ansprüchen, **dadurch gekennzeichnet, dass** jede Anordnung (10, 11) eine unterschiedlich ausgestaltete elektrisch leitfähige Struktur (12) aufweist und jede elektrische Struktur (12) vorzugsweise jeweils eine unterschiedlich ausgestaltete Markierung (15, 16, 17) und eine gleiche ringförmige Berührungsfläche (13) aufweist.

12. Verfahren zum Herstellen einer Anordnung (10, 11) nach einem der Ansprüche 1 bis 12, umfassend die Schritte:
- Bereitstellen eines elektrisch isolierenden Trägermaterials (14),
- Aufbringen eines elektrisch leitfähigen Materials auf das Trägermaterial (14) oder in das Trägermaterial (14),
- Bilden der elektrisch leitfähigen Struktur (12),
- Bilden der Anordnung (10, 11).

13. Verfahren nach Anspruch 12, wobei das elektrisch leitfähige Material eine elektrisch leitfähige Farbe oder ein elektrisch leitfähiger Lack ist, und das elektrisch leitfähige Material mittels Siebdruck auf das Trägermaterial aufgebracht wird.

14. System, umfassend eine Anordnung (10, 11) nach einem der Ansprüche 1-10 und eine Steuer- und Verarbeitungseinheit (30),
- wobei die elektrisch leitfähige Struktur (12) der Anordnung (10, 11) dazu ausgebildet ist, bei einem Auflegen der Anordnung (10, 11) auf eine berührungsempfindliche Sensormatrix (40) Kapazitätsänderungen zu verursachen, die durch kapazitive Sensoren der berührungsempfindlichen Sensormatrix (40) als Sensordaten detektierbar sind,
- wobei die Steuer- und Verarbeitungseinheit (30) dazu ausgelegt ist, die Sensordaten zu empfangen und die Anordnung (10, 11) anhand der elektrisch leitfähigen Struktur (12) zu erkennen.

15. Verfahren zum Erkennen einer Anordnung (10, 11) der Ansprüche 1-10 auf einer berührungsempfindlichen Sensormatrix, mit den Schritten:
- Detektieren von Kapazitätsänderungen durch kapazitive Sensoren einer berührungsempfindlichen Sensormatrix (40), wobei die Kapazitätsänderungen durch die elektrisch leitfähige Struktur (12) der die Sensormatrix (40) kontaktierenden Anordnung (10, 11) verursacht werden,
- Erstellen eines Kapazitätsmusters für die leitende Struktur (12) der Anordnung (10, 11),
- Vergleichen des Kapazitätsmusters mit vorbekannten Kapazitätsmustern,
- Erkennen der Anordnung (10, 11) auf der berührungsempfindlichen Sensormatrix (40) anhand des Vergleichs.
